# EUROPEAN PATENT APPLICATION

(11) **EP 3 865 904 A1**
(43) Date of publication of application: **18.08.2021**
(21) Application number: 19870630.1
(22) Date of filing: 07.10.2019
(51) Int. Cl.: G01S 13/34, G01S 13/93, G01V 3/12

(54) **ELECTRONIC DEVICE, ELECTRONIC DEVICE CONTROL METHOD, AND ELECTRONIC DEVICE CONTROL PROGRAM**

(30) Priority: 12.10.2018 JP 2018193317; 20.03.2019 JP 2019053575
(71) Applicant: Kyocera Corporation, Kyoto-shi, Kyoto 612-8501 (JP)
(72) Inventor: SAHARA Tooru, Kyoto-shi, Kyoto 612-8501 (JP); NISHIKIDO Masamitsu, Kyoto-shi, Kyoto 612-8501 (JP); MURAKAMI Youhei, Kyoto-shi, Kyoto 612-8501 (JP); KAWAJI Satoshi, Kyoto-shi, Kyoto 612-8501 (JP); SATO Masayuki, Kyoto-shi, Kyoto 612-8501 (JP); HOMMA Takuya, Kyoto-shi, Kyoto 612-8501 (JP)
(74) Representative: Viering, Jentschura & Partner mbB Patent- und Rechtsanwälte
(86) International application number: PCT/JP2019/039548
(87) International publication number: WO 2020/075689

(57) **Abstract**

An electronic device comprises: a transmission antenna configured to transmit transmission waves; a reception antenna configured to receive reflected waves resulting from reflection of the transmission waves; and a controller. The controller is configured to detect an object reflecting the transmission waves, based on a transmission signal transmitted as the transmission waves and a reception signal received as the reflected waves. The controller is configured to set a range of detection of the object, for each frame of the transmission waves.

## Description

### CROSS REFERENCE TO RELATED APPLICATION

This application claims priority to and the benefit of Japanese Patent Application No. 2018-193317 filed on October 12, 2018 and Japanese Patent Application No. 2019-53575 filed on March 20, 2019, the entire disclosure of which is incorporated herein by reference.

### TECHNICAL FIELD

The present disclosure relates to an electronic device, a control method of an electronic device, and a control program of an electronic device.

### BACKGROUND

In fields such as automobile-related industry, techniques of measuring, for example, the distance between a vehicle and a certain object are considered important. In particular, various techniques of radar (radio detecting and ranging) that measures, for example, the distance from an object such as an obstacle by transmitting radio waves such as millimeter waves and receiving reflected waves reflected off the object are studied in recent years. The importance of such techniques of measuring distance and the like is expected to further increase in the future, with the development of techniques of assisting the driver in driving and techniques related to automated driving whereby driving is wholly or partly automated.

There are also various proposals for techniques of detecting the presence of a certain object by receiving reflected waves resulting from reflection of transmitted radio waves off the object. As an example, JP H11-133144 A (PTL 1) discloses a FM-CW radar device that irradiates a target object with a transmission signal subjected to linear FM modulation in a specific cycle, detects a beat signal based on the difference from a signal received from the target object, and analyzes the frequency of the signal to measure distance and speed. As another example, WO 2016/167253 A1 (PTL 2) discloses a technique of, in a transmitter that uses a high-frequency signal of tens of GHz as transmission waves, enabling control of the phase of the transmission waves to any value with high accuracy.

### CITATION LIST

### Patent Literature

PTL 1: JP H11-133144 A
PTL 2: WO 2016/167253 A1

### SUMMARY

An electronic device according to an embodiment comprises: a transmission antenna configured to transmit transmission waves; a reception antenna configured to receive reflected waves resulting from reflection of the transmission waves; and a controller. The controller is configured to detect an object reflecting the transmission waves, based on a transmission signal transmitted as the transmission waves and a reception signal received as the reflected waves. The controller is configured to set a range of detection of the object, for each frame of the transmission waves.

An electronic device according to an embodiment comprises: a transmission antenna configured to transmit transmission waves; a reception antenna configured to receive reflected waves resulting from reflection of the transmission waves; and a controller. The controller is configured to detect an object reflecting the transmission waves, based on a transmission signal transmitted as the transmission waves and a reception signal received as the reflected waves. The controller is configured to set a range of detection of the object, for at least any of each frame of the transmission waves, each portion constituting the frame, and each chirp signal included in the transmission waves.

An electronic device according to an embodiment comprises: a transmission antenna configured to transmit transmission waves; a reception antenna configured to receive reflected waves resulting from reflection of the transmission waves; and a controller. The controller is configured to detect an object reflecting the transmission waves, based on a transmission signal transmitted as the transmission waves and a reception signal received as the reflected waves. The controller is configured to set a range of detection of the object, for each frame of the transmission waves. The controller is configured to include, in the frame, a signal used for calibration.

A control method of an electronic device according to an embodiment comprises: (1) transmitting transmission waves from a transmission antenna; (2) receiving reflected waves resulting from reflection of the transmission waves, by a reception antenna; (3) detecting an object reflecting the transmission waves, based on a transmission signal transmitted as the transmission waves and a reception signal received as the reflected waves; and (4) setting a range of detection of the object, for each frame of the transmission waves.

A control program of an electronic device according to an embodiment causes a computer to execute the foregoing (1) to (4).

### BRIEF DESCRIPTION OF THE DRAWINGS

In the accompanying drawings:
FIG. 1 is a diagram illustrating a use state of an electronic device according to an embodiment;
FIG. 2 is a functional block diagram schematically illustrating a structure of the electronic device according to an embodiment;
FIG. 3 is a diagram illustrating a structure of a transmission signal according to an embodiment;
FIG. 4 is a diagram illustrating operation of the electronic device according to an embodiment;
FIG. 5 is a diagram illustrating an example of arrangement of transmission antennas and reception antennas in the electronic device according to an embodiment;
FIG. 6 is a diagram illustrating another example of arrangement of transmission antennas and reception antennas in the electronic device according to an embodiment;
FIG. 7 is a diagram illustrating distances of object detection by the electronic device according to an embodiment;
FIG. 8 is a diagram illustrating an example of setting an object detection range for each frame in an embodiment;
FIG. 9 is a diagram illustrating an example of setting an object detection range for each portion constituting a frame in an embodiment;
FIG. 10 is a diagram illustrating an example of setting an object detection range for each chirp signal constituting a frame in an embodiment;
FIG. 11 is a flowchart illustrating operation of the electronic device according to an embodiment;
FIG. 12 is a diagram illustrating an example of setting an object detection range in a frame in an embodiment;
FIG. 13 is a functional block diagram schematically illustrating a structure of an electronic device according to another embodiment;
FIG. 14 is a diagram illustrating a structure of a frame in another embodiment;
FIG. 15 is a conceptual diagram illustrating an example of an object detection range used in an electronic device according to an embodiment;
FIG. 16 is a conceptual diagram illustrating an example of an object detection range used in an electronic device according to an embodiment;
FIG. 17 is a conceptual diagram illustrating an example of an object detection range used in an electronic device according to an embodiment; and
FIG. 18 is a conceptual diagram illustrating an example of an object detection range used in an electronic device according to an embodiment.

### DETAILED DESCRIPTION

It is desirable to improve convenience in techniques of detecting a certain object by receiving reflected waves resulting from reflection of transmitted transmission waves off the object. It could therefore be helpful to provide an electronic device, a control method of an electronic device, and a control program of an electronic device that can improve convenience in object detection. According to an embodiment, it is possible to provide an electronic device, a control method of an electronic device, and a control program of an electronic device that can improve convenience in object detection. One of the disclosed embodiments will be described in detail below, with reference to the drawings.

An electronic device according to an embodiment can be mounted in a vehicle (mobile body) such as a car (automobile) to detect a certain object around the mobile body. The electronic device according to an embodiment can transmit transmission waves to the surroundings of the mobile body from a transmission antenna installed in the mobile body. The electronic device according to an embodiment can also receive reflected waves resulting from reflection of the transmission waves, by a reception antenna installed in the mobile body. At least one of the transmission antenna and the reception antenna may be included in, for example, a radar sensor installed in the mobile body.

The following will describe a structure in which the electronic device according to an embodiment is mounted in a car such as a passenger car, as a typical example. The electronic device according to an embodiment is, however, not limited to being mounted in a car. The electronic device according to an embodiment may be mounted in various mobile bodies such as a bus, a truck, a motorcycle, a bicycle, a ship, an airplane, an ambulance, a fire engine, a helicopter, a farming machine such as a tractor, and a drone. The electronic device according to an embodiment is not limited to being mounted in a mobile body that moves with its own power. For example, the mobile body in which the electronic device according to an embodiment is mounted may be a trailer portion towed by a tractor. The electronic device according to an embodiment can measure, for example, the distance between the sensor and the object in a situation in which at least one of the sensor and the object can move. The electronic device according to an embodiment can also measure, for example, the distance between the sensor and the object when both the sensor and the object are stationary.

An example of object detection by the electronic device according to an embodiment will be described below.

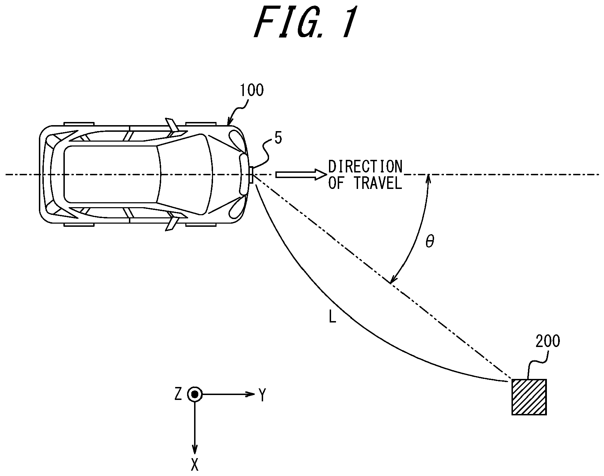

FIG. 1 is a diagram illustrating a use state of the electronic device according to an embodiment. FIG. 1 illustrates an example in which a sensor including a transmission antenna and a reception antenna according to an embodiment is installed in a mobile body.

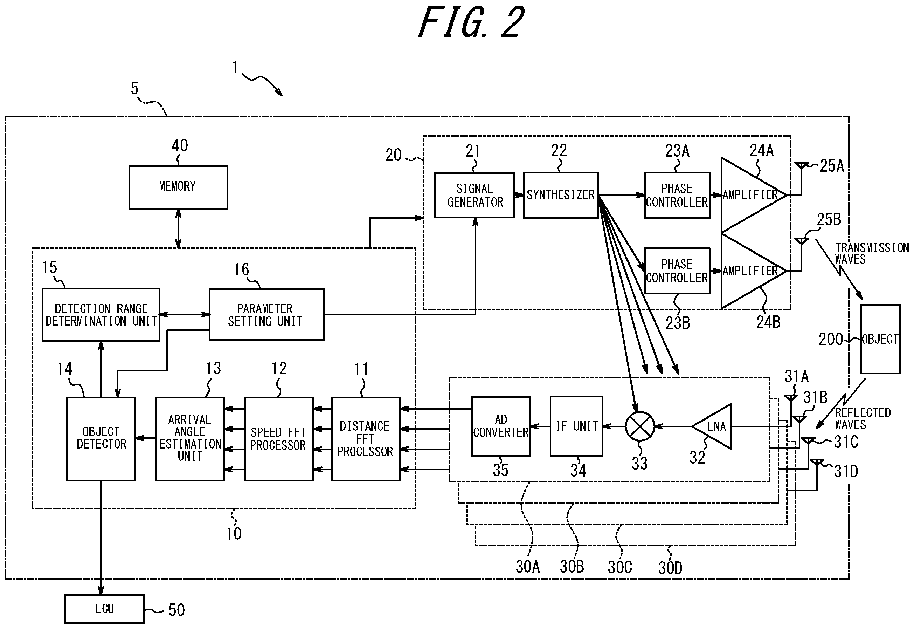

A sensor 5 including a transmission antenna and a reception antenna according to an embodiment is installed in a mobile body 100 illustrated in FIG. 1. An electronic device 1 according to an embodiment is mounted (e.g. included) in the mobile body 100 illustrated in FIG. 1. A specific structure of the electronic device 1 will be described later. For example, the sensor 5 may include at least one of the transmission antenna and the reception antenna. The sensor 5 may include at least one of the other functional parts, such as at least part of a controller 10 (FIG. 2) included in the electronic device 1, as appropriate. The mobile body 100 illustrated in FIG. 1 may be a vehicle of a car such as a passenger car. The mobile body 100 illustrated in FIG. 1 may be any type of mobile body. In FIG. 1, for example, the mobile body 100 may move (run or slow down) in the Y-axis positive direction (direction of travel) in the drawing, move in other directions, or be stationary without moving.

As illustrated in FIG. 1, the sensor 5 including a transmission antenna is installed in the mobile body 100. In the example illustrated in FIG. 1, only one sensor 5 including a transmission antenna and a reception antenna is installed at the front of the mobile body 100. The position at which the sensor 5 is installed in the mobile body 100 is not limited to the position illustrated in FIG. 1, and may be any other position as appropriate. For example, the sensor 5 illustrated in FIG. 1 may be installed at the left, the right, and/or the back of the mobile body 100. The number of sensors 5 may be any number greater than or equal to 1, depending on various conditions (or requirements) such as the range and/or accuracy of measurement in the mobile body 100. The sensor 5 may be installed inside the mobile body 100, such as a space inside a bumper, a space inside a headlight, or a driving space.

The sensor 5 transmits electromagnetic waves from the transmission antenna as transmission waves. For example, in the case where there is a certain object (e.g. an object 200 illustrated in FIG. 1) around the mobile body 100, at least part of the transmission waves transmitted from the sensor 5 is reflected off the object to become reflected waves. As a result of the reflected waves being received by, for example, the reception antenna of the sensor 5, the electronic device 1 mounted in the mobile body 100 can detect the object.

The sensor 5 including the transmission antenna may be typically a radar (radio detecting and ranging) sensor that transmits and receives radio waves. The sensor 5 is, however, not limited to a radar sensor. For example, the sensor 5 according to an embodiment may be a sensor based on a technique of lidar (light detection and ranging, laser imaging detection and ranging) by lightwaves. Such sensors may include, for example, patch antennas and the like. Since the techniques of radar and lidar are already known, detailed description is simplified or omitted as appropriate.

The electronic device 1 mounted in the mobile body 100 illustrated in FIG. 1 receives reflected waves of transmission waves transmitted from the transmission antenna in the sensor 5, by the reception antenna. Thus, the electronic device 1 can detect the object 200 present within a predetermined distance from the mobile body 100. For example, the electronic device 1 can measure the distance L between the mobile body 100 as the own vehicle and the object 200, as illustrated in FIG. 1. The electronic device 1 can also measure the relative speed of the mobile body 100 as the own vehicle and the object 200. The electronic device 1 can further measure the direction (arrival angle θ) in which the reflected waves from the object 200 reaches the mobile body 100 as the own vehicle.

The object 200 may be, for example, at least one of an oncoming car running in a lane adjacent to the mobile body 100, a car running parallel to the mobile body 100, and a car running ahead or behind in the same lane as the mobile body 100. The object 200 may be any object around the mobile body 100, such as a motorcycle, a bicycle, a stroller, a pedestrian, a guardrail, a median strip, a road sign, a sidewalk step, a wall, a manhole, a slope, and an obstacle. The object 200 may be moving or stopped. For example, the object 200 may be a car parked or stopped around the mobile body 100. The object 200 is not limited to being on a roadway, and may be in any appropriate location such as a sidewalk, a farm, farmland, a parking lot, a vacant lot, a space on a road, inside a store, a pedestrian crossing, on water, in the air, a gutter, a river, inside another mobile body, a building, or inside or outside of any other structure. In the present disclosure, examples of the object 200 detected by the sensor 5 include not only non-living objects but also living objects such as humans, dogs, cats, horses, and other animals. In the present disclosure, the object 200 detected by the sensor 5 includes a target such as a human, a thing, or an animal detected by radar technology.

In FIG. 1, the ratio between the size of the sensor 5 and the size of the mobile body 100 does not necessarily represent the actual ratio. In FIG. 1, the sensor 5 is installed on the outside of the mobile body 100. However, in an embodiment, the sensor 5 may be installed at any of various locations in the mobile body 100. For example, in an embodiment, the sensor 5 may be installed inside the bumper of the mobile body 100 so as not to be seen from outside.

It is assumed here that the transmission antenna in the sensor 5 transmits radio waves in a frequency band such as millimeter waves (30 GHz or more) or submillimeter waves (e.g. about 20 GHz to 30 GHz), as a typical example. For example, the transmission antenna in the sensor 5 may transmit radio waves with a frequency bandwidth of 4 GHz, e.g. 77 GHz to 81 GHz. The transmission antenna in the sensor 5 may transmit electromagnetic waves in a frequency band other than millimeter waves (30 GHz or more) or submillimeter waves (e.g. about 20 GHz to 30 GHz).

FIG. 2 is a functional block diagram schematically illustrating an example of the structure of the electronic device 1 according to an embodiment. The example of the structure of the electronic device 1 according to an embodiment will be described below.

When measuring distance or the like by millimeter wave radar, frequency-modulated continuous wave radar (hereafter, "FMCW radar") is often used. FMCW radar sweeps the frequency of transmitted radio waves to generate a transmission signal. Therefore, for example, in millimeter-wave FMCW radar using radio waves in a frequency band of 79 GHz, the radio waves used have a frequency bandwidth of 4 GHz, e.g. 77 GHz to 81 GHz. Radar of 79 GHz in frequency band has a feature that its usable frequency bandwidth is broader than that of other millimeter wave/submillimeter wave radar of 24 GHz, 60 GHz, 76 GHz, etc. in frequency band. This embodiment will be described below. A FMCW radar system used in the present disclosure may include a fast-chirp modulation (FCM) system that transmits a chirp signal in a cycle shorter than normal. The signal generated by the signal generator 21 is not limited to a FMCW signal. The signal generated by the signal generator 21 may be a signal of any of various systems other than FMCW. A transmission signal sequence stored in the memory 40 may be different depending on the system used. For example, in the case of a FMCW radar signal, a signal whose frequency increases and a signal whose frequency decreases for each time sample may be used. Well-known techniques can be appropriately applied to the foregoing various systems, and therefore more detailed description is omitted.

The electronic device 1 according to an embodiment includes the sensor 5 and an electronic control unit (ECU) 50, as illustrated in FIG. 2. The ECU 50 controls various operations of the mobile body 100. The ECU 50 may be composed of one or more ECUs. The electronic device 1 according to an embodiment includes the controller 10. The electronic device 1 according to an embodiment may include other functional parts as appropriate, such as at least one of a transmitter 20, receivers 30A to 30D, and a memory 40. The electronic device 1 may include a plurality of receivers such as the receivers 30A to 30D, as illustrated in FIG. 2. Hereafter, in the case where the receivers 30A to 30D are not distinguished from one another, they are simply referred to as "receiver 30".

The controller 10 includes a distance FFT processor 11, a speed FFT processor 12, an arrival angle estimation unit 13, an object detector 14, a detection range determination unit 15, and a parameter setting unit 16. These functional parts included in the controller 10 will be described in detail later.

The transmitter 20 may include a signal generator 21, a synthesizer 22, phase controllers 23A and 23B, amplifiers 24A and 24B, and transmission antennas 25A and 25B, as illustrated in FIG. 2. Hereafter, in the case where the phase controllers 23A and 23B are not distinguished from each other, they are simply referred to as "phase controller 23". In the case where the amplifiers 24A and 24B are not distinguished from each other, they are simply referred to as "amplifier 24". In the case where the transmission antennas 25A and 25B are not distinguished from each other, they are simply referred to as "transmission antenna 25".

The respective receivers 30 may include corresponding reception antennas 31A to 31D, as illustrated in FIG. 2. Hereafter, in the case where the reception antennas 31A to 31D are not distinguished from one another, they are simply referred to as "reception antenna 31". The plurality of receivers 30 may each include a LNA 32, a mixer 33, an IF unit 34, and an AD converter 35, as illustrated in FIG. 2. The receivers 30A to 30D may have the same structure. FIG. 2 schematically illustrates only the structure of the receiver 30A as a typical example.

The sensor 5 may include, for example, the transmission antennas 25 and the reception antennas 31. The sensor 5 may include at least one of the other functional parts such as the controller 10, as appropriate.

The controller 10 included in the electronic device 1 according to an embodiment controls overall operation of the electronic device 1, including control of each of the functional parts included in the electronic device 1. The controller 10 may include at least one processor such as a central processing unit (CPU), to provide control and processing capacity for achieving various functions. The controller 10 may be implemented by one processor, by several processors, or by respective separate processors. Each processor may be implemented as a single integrated circuit (IC). Each processor may be implemented as a plurality of integrated circuits and/or discrete circuits communicably connected to one another. Each processor may be implemented based on any of other various known techniques. In an embodiment, the controller 10 may be implemented, for example, by a CPU and a program executed by the CPU. The controller 10 may include a memory necessary for the operation of the controller 10.

The memory 40 may store the program executed by the controller 10, results of processes performed by the controller 10, and the like. The memory 40 may function as a work memory of the controller 10. The memory 40 may be implemented, for example, by a semiconductor memory, a magnetic disk, or the like. The memory 40 is, however, not limited to such, and may be any storage device. For example, the memory 40 may be a storage medium such as a memory card inserted in the electronic device 1 according to an embodiment. The memory 40 may be an internal memory of the CPU used as the controller 10 as described above.

In an embodiment, the memory 40 may store various parameters for setting the range of object detection by the transmission waves T transmitted by the transmission antenna 25 and the reflected waves R received by the reception antenna 31. Such parameters will be described in detail later. In the present disclosure, the term "object detection range" includes at least one of an object detection distance range and an object detection angle range. In the present disclosure, the term "object detection angle range" may include a horizontal angle range and a vertical angle range with respect to the ground, and any other angle ranges.

In the electronic device 1 according to an embodiment, the controller 10 can control at least one of the transmitter 20 and the receiver 30. In this case, the controller 10 may control at least one of the transmitter 20 and the receiver 30 based on various information stored in the memory 40. In the electronic device 1 according to an embodiment, the controller 10 may instruct the signal generator 21 to generate a signal, or control the signal generator 21 to generate a signal.

The signal generator 21 generates a signal (transmission signal) transmitted from the transmission antenna 25 as the transmission waves T, based on control by the controller 10. When generating the transmission signal, for example, the signal generator 21 may assign the frequency of the transmission signal based on control by the controller 10. Specifically, the signal generator 21 may assign the frequency of the transmission signal according to a parameter set by the parameter setting unit 16. For example, the signal generator 21 receives frequency information from the controller 10 (the parameter setting unit 16), and generates a signal of a predetermined frequency in a frequency band of 77 GHz to 81 GHz. The signal generator 21 may include a functional part such as a voltage controlled oscillator (VCO).

The signal generator 21 may be configured as hardware having the function, configured as a microcomputer or the like, or configured as a processor such as a CPU and a program executed by the processor. Each functional part described below may be configured as hardware having the function, or, if possible, configured as a microcomputer or the like or configured as a processor such as a CPU and a program executed by the processor.

In the electronic device 1 according to an embodiment, the signal generator 21 may generate a transmission signal (transmission chirp signal) such as a chirp signal. In particular, the signal generator 21 may generate a signal (linear chirp signal) whose frequency linearly changes periodically. For example, the signal generator 21 may generate a chirp signal whose frequency linearly increases periodically from 77 GHz to 81 GHz with time. For example, the signal generator 21 may generate a chirp signal whose frequency linearly increases periodically in a certain range from 77 GHz to 81 GHz with time. For example, the signal generator 21 may generate a signal whose frequency periodically repeats a linear increase (up-chirp) and decrease (down-chirp) from 77 GHz to 81 GHz with time. The signal generated by the signal generator 21 may be, for example, set by the controller 10 beforehand. The signal generated by the signal generator 21 may be, for example, stored in the memory 40 or the like beforehand. Since chirp signals used in technical fields such as radar are already known, more detailed description is simplified or omitted as appropriate. The signal generated by the signal generator 21 is supplied to the synthesizer 22.

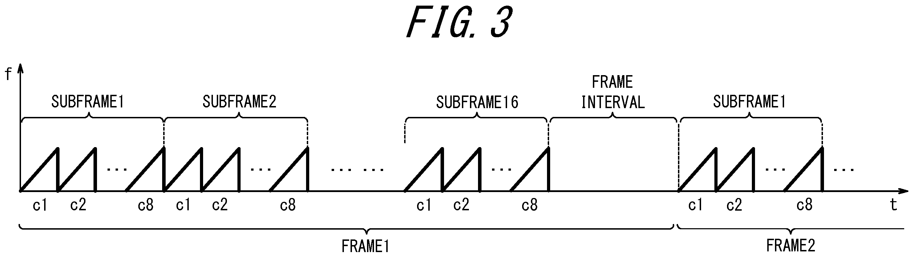

FIG. 3 is a diagram illustrating an example of a chirp signal generated by the signal generator 21.

In FIG. 3, the horizontal axis represents elapsed time, and the vertical axis represents frequency. In the example illustrated in FIG. 3, the signal generator 21 generates a linear chirp signal whose frequency linearly changes periodically. In FIG. 3, chirp signals are designated as c1, c2, ..., c8. In each chirp signal, the frequency increases linearly with time, as illustrated in FIG. 3.

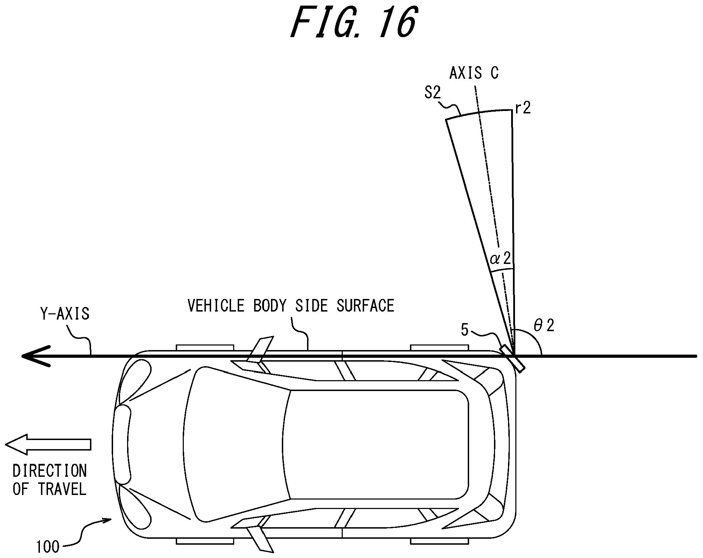

In the example illustrated in FIG. 3, eight chirp signals, e.g. c1, c2, ..., c8, are included in one subframe. That is, each of subframes 1, 2, etc. illustrated in FIG. 3 is composed of eight chirp signals c1, c2, ..., c8. In the example illustrated in FIG. 3, 16 subframes, e.g. subframes 1 to 16, are included in one frame. That is, each of frames 1, 2, etc. illustrated in FIG. 3 is composed of 16 subframes. Predetermined frame intervals may be provided between the frames, as illustrated in FIG. 3. One frame in FIG. 3 may have, for example, a length of about 30 milliseconds to 50 milliseconds. In each embodiment according to the present disclosure, a frame serves as a unit of processing by processors such as the ECU 50. Information such as the position, speed, and angle of at least one detection target may be included by each signal in one frame.

In FIG. 3, each subsequent frame from the frame 2 may have the same structure. In FIG. 3, each subsequent frame from the frame 3 may have the same structure. In FIG. 3, each subsequent frame from the frame 2 may have the same structure as or a different structure from the frame 1. In the electronic device 1 according to an embodiment, the signal generator 21 may generate a transmission signal of any number of frames. In FIG. 3, some chirp signals are omitted. The relationship between the time and the frequency of the transmission signal generated by the signal generator 21 may be stored, for example, in the memory 40.

Thus, the electronic device 1 according to an embodiment may transmit a transmission signal composed of subframes each of which includes a plurality of chirp signals. The electronic device 1 according to an embodiment may transmit a transmission signal composed of frames each of which includes a predetermined number of subframes.

In the following description, it is assumed that the electronic device 1 transmits a transmission signal of the frame structure illustrated in FIG. 3. The frame structure illustrated in FIG. 3 is, however, an example. For example, the number of chirp signals included in one subframe is not limited to 8. In an embodiment, the signal generator 21 may generate a subframe including any number (e.g. a plurality) of chirp signals. The subframe structure illustrated in FIG. 3 is also an example. For example, the number of subframes included in one frame is not limited to 16. In an embodiment, the signal generator 21 may generate a frame including any number (e.g. a plurality) of subframes.

Referring back to FIG. 2, the synthesizer 22 increases the frequency of the signal generated by the signal generator 21 to a frequency in a predetermined frequency band. The synthesizer 22 may increase the frequency of the signal generated by the signal generator 21 to a frequency selected as the frequency of the transmission waves T transmitted from the transmission antenna 25. The frequency selected as the frequency of the transmission waves T transmitted from the transmission antenna 25 may be, for example, set by the controller 10. For example, the frequency selected as the frequency of the transmission waves T transmitted from the transmission antenna 25 may be a frequency selected by the parameter setting unit 16. The frequency selected as the frequency of the transmission waves T transmitted from the transmission antenna 25 may be, for example, stored in the memory 40. The signal increased in frequency by the synthesizer 22 is supplied to the phase controller 23 and the mixer 33. In the case where there are a plurality of phase controllers 23, the signal increased in frequency by the synthesizer 22 may be supplied to each of the plurality of phase controllers 23. In the case where there are a plurality of receivers 30, the signal increased in frequency by the synthesizer 22 may be supplied to the mixer 33 in each of the plurality of receivers 30.

The phase controller 23 controls the phase of the transmission signal supplied from the synthesizer 22. Specifically, the phase controller 23 may, for example, adjust the phase of the transmission signal by advancing or delaying the phase of the signal supplied from the synthesizer 22 as appropriate, based on control by the controller 10. In this case, based on the path difference between the transmission waves T transmitted from the plurality of transmission antennas 25, the phase controllers 23 may adjust the phases of the respective transmission signals. As a result of the phase controllers 23 adjusting the phases of the respective transmission signals as appropriate, the transmission waves T transmitted from the plurality of transmission antennas 25 intensify each other and form a beam in a predetermined direction (i.e. beamforming). In this case, the correlation between the beamforming direction and the amount of phase to be controlled in the transmission signal transmitted from each of the plurality of transmission antennas 25 may be stored in, for example, the memory 40. The transmission signal phase-controlled by the phase controller 23 is supplied to the amplifier 24. Herein, beamforming involves concentrating transmission power in a predetermined direction.

The amplifier 24 amplifies the power of the transmission signal supplied from the phase controller 23, for example based on control by the controller 10. In the case where the sensor 5 includes a plurality of transmission antennas 25, a plurality of amplifiers 24 may each amplify the power of the transmission signal supplied from a corresponding one of the plurality of phase controllers 23, for example based on control by the controller 10. The technique of amplifying the power of the transmission signal is known, and therefore its more detailed description is omitted. The amplifier 24 is connected to the transmission antenna 25.

The transmission antenna 25 outputs (transmits) the transmission signal amplified by the amplifier 24, as the transmission waves T. In the case where the sensor 5 includes a plurality of transmission antennas 25, each of the plurality of transmission antennas 25 may output (transmit) the transmission signal amplified by a corresponding one of the plurality of amplifiers 24, as the transmission waves T. Since the transmission antenna 25 can be configured in the same way as transmission antennas used in known radar techniques, more detailed description is omitted.

Thus, the electronic device 1 according to an embodiment includes the transmission antenna 25, and can transmit the transmission signal (e.g. transmission chirp signal) from the transmission antenna 25 as the transmission waves T. At least one of the functional parts included in the electronic device 1 may be contained in one housing. The housing may have a structure that cannot be opened easily. For example, the transmission antenna 25, the reception antenna 31, and the amplifier 24 may be contained in one housing having a structure that cannot be opened easily. In the case where the sensor 5 is installed in the mobile body 100 such as a car, the transmission antenna 25 may transmit the transmission waves T to outside the mobile body 100 through a cover member such as a radar cover. In this case, the radar cover may be made of a material that allows electromagnetic waves to pass through, such as synthetic resin or rubber. For example, the radar cover may be a housing of the sensor 5. By covering the transmission antenna 25 with a member such as a radar cover, the risk that the transmission antenna 25 breaks or becomes defective due to external contact can be reduced. The radar cover and the housing are also referred to as "radome".

In the example illustrated in FIG. 2, the electronic device 1 includes two transmission antennas 25. In an embodiment, however, the electronic device 1 may include any number of transmission antennas 25. In an embodiment, the electronic device 1 may include a plurality of transmission antennas 25 in the case of forming, in a predetermined direction, a beam of the transmission waves T transmitted from the transmission antennas 25. In an embodiment, the electronic device 1 may include any number of transmission antennas 25, where the number is 2 or more. In this case, the electronic device 1 may include a plurality of phase controllers 23 and a plurality of amplifiers 24 corresponding to the plurality of transmission antennas 25. The plurality of phase controllers 23 may control the phases of the plurality of transmission waves supplied from the synthesizer 22 and transmitted from the respective plurality of transmission antennas 25. The plurality of amplifiers 24 may amplify the powers of the plurality of transmission signals transmitted from the respective plurality of transmission antennas 25. In this case, the sensor 5 may include the plurality of transmission antennas. Thus, in the case where the electronic device 1 illustrated in FIG. 2 includes the plurality of transmission antennas 25, the electronic device 1 may equally include the pluralities of functional parts necessary for transmitting the transmission waves T from the plurality of transmission antennas 25.

The reception antenna 31 receives reflected waves R. The reflected waves R result from reflection of the transmission waves T off the object 200. The reception antenna 31 may include a plurality of antennas such as the reception antennas 31A to 31D. Since the reception antenna 31 can be configured in the same way as reception antennas used in known radar techniques, more detailed description is omitted. The reception antenna 31 is connected to the LNA 32. A reception signal based on the reflected waves R received by the reception antenna 31 is supplied to the LNA 32.

The electronic device 1 according to an embodiment can receive the reflected waves R as a result of the transmission waves T transmitted as the transmission signal such as a chirp signal (transmission chirp signal) being reflected off the object 200, by the plurality of reception antennas 31. In the case where the transmission chirp signal is transmitted as the transmission waves T, the reception signal based on the received reflected waves R is referred to as "reception chirp signal". That is, the electronic device 1 receives the reception signal (e.g. reception chirp signal) by the reception antenna 31 as the reflected waves R. In the case where the sensor 5 is installed in the mobile body 100 such as a car, the reception antenna 31 may receive the reflected waves R from outside the mobile body 100 through a cover member such as a radar cover. In this case, the radar cover may be made of a material that allows electromagnetic waves to pass through, such as synthetic resin or rubber. For example, the radar cover may be a housing of the sensor 5. By covering the reception antenna 31 with a member such as a radar cover, the risk that the reception antenna 31 breaks or becomes defective due to external contact can be reduced. The radar cover and the housing are also referred to as "radome".

In the case where the reception antenna 31 is installed near the transmission antenna 25, these antennas may be included in one sensor 5 in combination. For example, one sensor 5 may include at least one transmission antenna 25 and at least one reception antenna 31. For example, one sensor 5 may include a plurality of transmission antennas 25 and a plurality of reception antennas 31. In such a case, for example, one radar sensor may be covered with one cover member such as a radar cover.

The LNA 32 amplifies the reception signal based on the reflected waves R received by the reception antenna 31, with low noise. The LNA 32 may be a low-noise amplifier, and amplifies the reception signal supplied from the reception antenna 31 with low noise. The reception signal amplified by the LNA 32 is supplied to the mixer 33.

The mixer 33 mixes (multiplies) the reception signal of RF frequency supplied from the LNA 32 and the transmission signal supplied from the synthesizer 22, to generate a beat signal. The beat signal generated by the mixer 33 is supplied to the IF unit 34.

The IF unit 34 performs frequency conversion on the beat signal supplied from the mixer 33, to lower the frequency of the beat signal to intermediate frequency (IF). The beat signal lowered in frequency by the IF unit 34 is supplied to the AD converter 35.

The AD converter 35 digitizes the analog beat signal supplied from the IF unit 34. The AD converter 35 may include any analog-to-digital converter (ADC). The beat signal digitized by the AD converter 35 is supplied to the distance FFT processor 11 in the controller 10. In the case where there are the plurality of receivers 30, the respective beat signals digitized by the plurality of AD converters 35 may be supplied to the distance FFT processor 11.

The distance FFT processor 11 estimates the distance between the mobile body 100 having the electronic device 1 mounted therein and the object 200, based on the beat signal supplied from the AD converter 35. The distance FFT processor 11 may include, for example, a processor that performs a fast Fourier transform (FFT). In this case, the distance FFT processor 11 may be composed of any circuit, chip, or the like for performing FFT processing.

The distance FFT processor 11 performs FFT processing (hereafter also referred to as "distance FFT processing") on the beat signal digitized by the AD converter 35. For example, the distance FFT processor 11 may perform FFT processing on the complex signal supplied from the AD converter 35. The beat signal digitized by the AD converter 35 can be expressed as the temporal change of the signal intensity (power). As a result of the distance FFT processor 11 performing FFT processing on such a beat signal, the signal intensity (power) corresponding to each frequency can be expressed. In the case where the peak of the result obtained by the distance FFT processing is greater than or equal to a predetermined threshold, the distance FFT processor 11 may determine that the object 200 is present at a distance corresponding to the peak. For example, there is a known method that, upon detecting a peak value greater than or equal to a threshold from an average power or amplitude of a disturbance signal, determines that there is an object (reflecting object) reflecting transmission waves, as in constant false alarm rate (CFAR) detection.

Thus, the electronic device 1 according to an embodiment can detect the object 200 reflecting the transmission waves T, based on the transmission signal transmitted as the transmission waves T and the reception signal received as the reflected waves R.

The distance FFT processor 11 can estimate the distance from the object based on one chirp signal (e.g. c1 in FIG. 3). That is, the electronic device 1 can measure (estimate) the distance L illustrated in FIG. 1, by performing distance FFT processing. Since the technique of measuring (estimating) the distance from a certain object by performing FFT processing on a beat signal is well known, more detailed description is simplified or omitted as appropriate. The result (e.g. distance information) of performing distance FFT processing by the distance FFT processor 11 may be supplied to the speed FFT processor 12. The result of performing distance FFT processing by the distance FFT processor 11 may be also supplied to the object detector 14.

The speed FFT processor 12 estimates the relative speed of the mobile body 100 having the electronic device 1 mounted therein and the object 200, based on the beat signal subjected to distance FFT processing by the distance FFT processor 11. The speed FFT processor 12 may include, for example, a processor that performs a fast Fourier transform (FFT). In this case, the speed FFT processor 12 may be composed of any circuit, chip, or the like for performing FFT processing.

The speed FFT processor 12 performs FFT processing (hereafter also referred to as "speed FFT processing") on the beat signal subjected to distance FFT processing by the distance FFT processor 11. For example, the speed FFT processor 12 may perform FFT processing on the complex signal supplied from the distance FFT processor 11. The speed FFT processor 12 can estimate the relative speed with respect to the object, based on a subframe of chirp signals (e.g. subframe 1 in FIG. 3). As a result of performing distance FFT processing on the beat signal as mentioned above, a plurality of vectors can be generated. By finding the phase of a peak in the result of subjecting the plurality of vectors to speed FFT processing, the relative speed with respect to the object can be estimated. That is, the electronic device 1 can measure (estimate) the relative speed of the mobile body 100 and the object 200 illustrated in FIG. 1, by performing speed FFT processing. Since the technique of measuring (estimating) the relative speed with respect to a certain object by performing speed FFT processing on a result of distance FFT processing is well known, more detailed description is simplified or omitted as appropriate. The result (e.g. speed information) of performing speed FFT processing by the speed FFT processor 12 may be supplied to the arrival angle estimation unit 13. The result of performing speed FFT processing by the speed FFT processor 12 may be also supplied to the object detector 14.

The arrival angle estimation unit 13 estimates the direction in which the reflected waves R reach from the object 200, based on the result of speed FFT processing by the speed FFT processor 12. The electronic device 1 can estimate the direction in which the reflected waves R reach, by receiving the reflected waves R from the plurality of reception antennas 31. For example, suppose the plurality of reception antennas 31 are arranged at predetermined intervals. The transmission waves T transmitted from the transmission antenna 25 are reflected off the object 200 to become the reflected waves R, which are received by each of the plurality of reception antennas 31 arranged at the predetermined intervals. Based on the phase of the reflected waves R received by each of the plurality of reception antennas 31 and the path difference between the reflected waves R of the plurality of reception antennas 31, the arrival angle estimation unit 13 can estimate the direction in which the reflected waves R reach the reception antennas 31. That is, the electronic device 1 can measure (estimate) the arrival angle θ illustrated in FIG. 1, based on the result of speed FFT processing.

There are various proposed techniques of estimating the direction in which the reflected waves R reach based on the result of speed FFT processing Examples of known arrival direction estimation algorithms include multiple signal classification (MUSIC) and estimation of signal parameters via rotational invariance technique (ESPRIT). Detailed description of such known techniques is simplified or omitted as appropriate. Information (angle information) of the arrival angle θ estimated by the arrival angle estimation unit 13 may be supplied to the object detector 14.

The object detector 14 detects an object present in the range in which the transmission waves T are transmitted, based on the information supplied from at least one of the distance FFT processor 11, the speed FFT processor 12, and the arrival angle estimation unit 13. For example, the object detector 14 may detect the object by performing clustering processing based on the supplied distance information, speed information, and angle information. As an algorithm used when clustering data, for example, density-based spatial clustering of applications with noise (DBSCAN) is known. In clustering processing, for example, the average power of points constituting the detected object may be calculated. The distance information, speed information, angle information, and power information of the object detected by the object detector 14 may be supplied to the detection range determination unit 15. The distance information, speed information, angle information, and power information of the object detected by the object detector 14 may be supplied to the ECU 50. In the case where the mobile body 100 is a car, the communication may be performed using a communication interface such as CAN (Controller Area Network).

The detection range determination unit 15 determines a range (hereafter also referred to as "object detection range") of detecting an object reflecting the transmission waves T based on the transmission signal and the reception signal. The detection range determination unit 15 may determine a plurality of object detection ranges based on, for example, an operation by the driver of the mobile body 100 in which the electronic device 1 is mounted. For example, in the case where the driver of the mobile body 100 or the like operates a parking assistance button, the detection range determination unit 15 may determine a plurality of object detection ranges appropriate for parking assistance. The detection range determination unit 15 may determine a plurality of object detection ranges based on, for example, an instruction from the ECU 50. For example, in the case where the ECU 50 determines that the mobile body 100 is about to be reversed, the detection range determination unit 15 may determine, based on an instruction from the ECU 50, a plurality of object detection ranges appropriate when reversing the mobile body 100. The detection range determination unit 15 may determine a plurality of object detection ranges based on, for example, a change in the operating state of the steering, the accelerator, the gear, etc. in the mobile body 100. Moreover, the detection range determination unit 15 may determine a plurality of object detection ranges based on the result of object detection by the object detector 14. The detection range determination unit 15 may determine object detection ranges based on the surrounding environment of the mobile body 100, such as the weather, the degree of congestion indicating whether the place is crowded, and the time zone including information of whether it is night.

The parameter setting unit 16 sets various parameters defining the transmission signal and the reception signal for detecting the object reflecting the transmission waves T as the reflected waves R. In detail, the parameter setting unit 16 sets various parameters for transmitting the transmission waves T by the transmission antenna 25 and various parameters for receiving the reflected waves R by the reception antenna 31. The parameter setting unit 16 may set the value of the frequency change of the chirp signal with respect to time, which is called slope, and/or the sampling rate. That is, the distance range of radar changes depending on the slope set by the parameter setting unit 16. Moreover, the distance accuracy (distance resolution) changes depending on the sampling rate set by the parameter setting unit 16. In addition, switching between a short-distance three-dimensional sensing mode and a two-dimensional beamforming mode is possible by setting by the parameter setting unit 16. The short-distance three-dimensional sensing mode enables three-dimensional sensing by switching antennas that are separated by a half wavelength in the vertical direction. The two-dimensional beamforming mode enables high-speed detection. In the two-dimensional beamforming mode, transmission over a long distance is possible by beamforming. In the two-dimensional beamforming mode, unwanted interference of the surroundings can be reduced by narrowing the beam. The parameter setting unit 16 may also control the output, phase, amplitude, frequency, frequency range, etc. of the chirp signal.

In particular, in an embodiment, the parameter setting unit 16 may set various parameters relating to the transmission of the transmission waves T and the reception of the reflected waves R, in order to perform object detection in the foregoing object detection range. For example, the parameter setting unit 16 may define the range of receiving the reflected waves R, in order to receive the reflected waves R and detect an object in the object detection range. For example, the parameter setting unit 16 may define the range of aiming the beam of the transmission waves T, in order to transmit the transmission waves T from the plurality of transmission antennas 25 and detect an object in the object detection range. The parameter setting unit 16 may set various parameters for performing the transmission of the transmission waves T and the reception of the reflected waves R.

The parameters set by the parameter setting unit 16 may be supplied to the signal generator 21. Thus, the signal generator 21 can generate the transmission signal transmitted as the transmission waves T based on the parameters set by the parameter setting unit 16. The parameters set by the parameter setting unit 16 may be supplied to the object detector 14. Thus, the object detector 14 can perform the process of object detection in the object detection range determined based on the parameters set by the parameter setting unit 16.

The ECU 50 included in the electronic device 1 according to an embodiment can control overall operation of the mobile body 100, including control of each of the functional parts included in the mobile body 100. The ECU 50 may include at least one processor such as a central processing unit (CPU), to provide control and processing capacity for achieving various functions. The ECU 50 may be implemented by one processor, by several processors, or by respective separate processors. Each processor may be implemented as a single integrated circuit (IC). Each processor may be implemented as a plurality of integrated circuits and/or discrete circuits communicably connected to one another. Each processor may be implemented based on any of other various known techniques. In an embodiment, the ECU 50 may be implemented, for example, by a CPU and a program executed by the CPU. The ECU 50 may include a memory necessary for the operation of the ECU 50. The ECU 50 may have at least part of the functions of the controller 10, and the controller 10 may have at least part of the functions of the ECU 50.

Although the electronic device 1 illustrated in FIG. 2 includes two transmission antennas 25 and four reception antennas 31, the electronic device 1 according to an embodiment may include any number of transmission antennas 25 and any number of reception antennas 31. For example, the inclusion of two transmission antennas 25 and four reception antennas 31 enables the electronic device 1 to have a virtual antenna array composed of eight antennas virtually. For example, the electronic device 1 may receive the reflected waves R of 16 subframes illustrated in FIG. 3, by using the virtual eight antennas.

Operation of the electronic device 1 according to an embodiment will be described below.

In recent years, there are various sensors capable of detecting obstacles present around vehicles such as cars, e.g. millimeter wave radar, lidar (light detection and ranging, laser imaging detection and ranging), and ultrasonic sensors. Of these sensors, millimeter wave radar is often used from the viewpoint of accuracy and reliability in obstacle detection, cost, and the like.

Examples of techniques of detecting obstacles and the like around vehicles using millimeter wave radar include blind spot detection (BSD), lateral direction detection (cross traffic alert: CTA) during reversing or departure, and free space detection (FSD). In these types of detection, typically a radio wave radiation range that depends on the physical shape of antennas of millimeter wave radar is set beforehand to determine an object detection range. In detail, in typical specifications, for each radar system, the physical shape of antennas of millimeter wave radar is predetermined depending on the application, function, etc. of the radar, and an object detection range is predefined. Therefore, a plurality of different radar sensors are needed in order to achieve a plurality of different radar functions.

It is, however, disadvantageous in terms of cost to prepare a plurality of radar sensors for different applications or functions. Moreover, for example, when the physical shape of the antennas is predetermined and the radiation range is predetermined, it is difficult to change the application and function of the antennas. For example, in the case where the physical shape and radiation range of the antenna are predetermined and all target objects in the radiation range are detected, the amount of information to be processed increases. In such a case, there is a possibility that unnecessary objects are erroneously detected as target objects. This can cause a decrease in detection reliability. Moreover, for example, in the case where the physical shape and radiation range of the antennas are predetermined and the number of sensors installed is increased, the fuel efficiency may decrease due to an increase of the weight of the vehicle (mainly the harness) or an increase of the power consumption. Further, if detection is performed using the plurality of radar sensors, a delay can occur between the sensors. When automatic driving, driving assistance, or the like is performed based on such detection, processing is likely to take time. This is because the CAN processing speed is slower than the radar update rate, and also feedback requires time. If detection is performed using a plurality of sensors with different object detection ranges, control tends to be complex.

In view of this, the electronic device 1 according to an embodiment enables one radar sensor to be used for a plurality of functions or applications. The electronic device 1 according to an embodiment also enables operation as if to simultaneously achieve the plurality of functions or applications by one radar sensor.

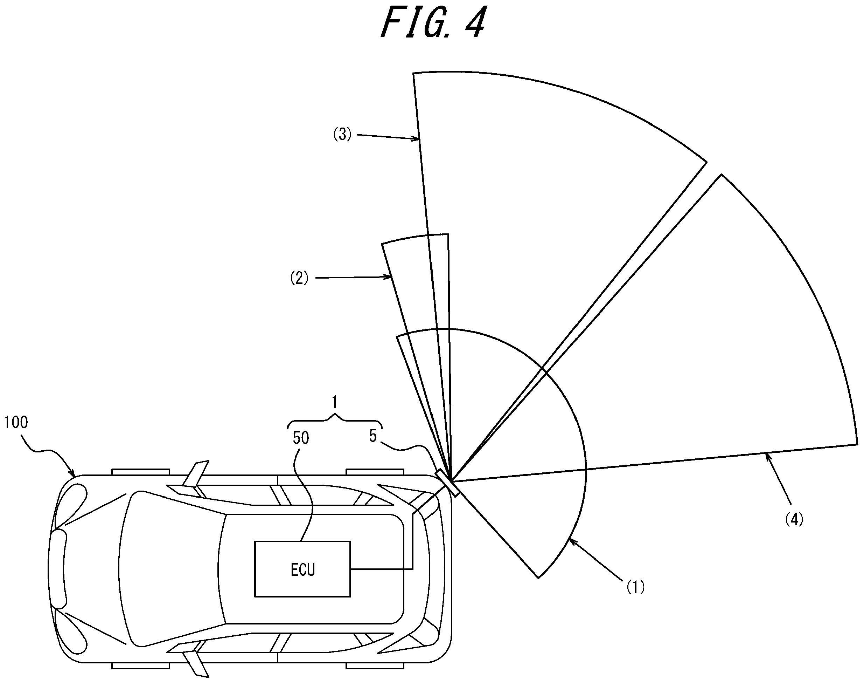

FIG. 4 is a diagram illustrating an example of operation of the electronic device 1 according to an embodiment.

The mobile body 100 illustrated in FIG. 4 has the electronic device 1 according to an embodiment mounted therein. At least one sensor 5 is installed at the back right of the mobile body 100, as illustrated in FIG. 4. The sensor 5 is connected to the ECU 50 mounted in the mobile body 100, as illustrated in FIG. 4. Besides the sensor 5 installed at the back right, the sensor 5 that operates in the same way as the sensor 5 at the back right may be installed in the mobile body 100 illustrated in FIG. 4. The following will describe only one sensor 5 installed at the back right, while omitting the description of other sensors. In the following description, it is assumed that each functional part included in the electronic device 1 can be controlled by at least one of the controller 10, the phase controller 23, and the ECU 50. In the mobile body 100 illustrated in FIG. 4, the sensor 5 that operates in the same way as the sensor 5 installed at the back right may be installed at any appropriate position other than the back right, such as the back left, the back center, the right or left side surface, the front right, the front left, or the front center.

As illustrated in FIG. 4, the electronic device 1 according to an embodiment can select any of a plurality of detection ranges and perform object detection. The electronic device 1 according to an embodiment can switch between the plurality of detection ranges to perform object detection. An example of the ranges of detecting objects by the transmission signal transmitted by the sensor 5 in the electronic device 1 according to an embodiment and the reception signal received by the sensor 5 in the electronic device 1 are illustrated in FIG. 4. The ranges of detecting objects by the transmission signal transmitted by the sensor 5 in the electronic device 1 according to an embodiment and the reception signal received by the sensor 5 in the electronic device 1 are not limited to the ranges illustrated in FIG. 4, and may be other appropriate ranges.

For example, in the case of using the sensor 5 for an application or function of parking assistance (PA), the electronic device 1 according to an embodiment can perform object detection using a range (1) illustrated in FIG. 4 as an object detection range. The object detection range (1) illustrated in FIG. 4 may be, for example, the same as or similar to the object detection range of radar specifically designed for parking assistance (PA). For example, in the case of using the sensor 5 for an application or function of free space detection (FSD), the electronic device 1 according to an embodiment can perform object detection using a range (2) illustrated in FIG. 4 as an object detection range. The object detection range (2) illustrated in FIG. 4 may be, for example, the same as or similar to the object detection range of radar specifically designed for free space detection (FSD).

For example, in the case of using the sensor 5 for an application or function of cross traffic alert (CTA), the electronic device 1 according to an embodiment can perform object detection using a range (3) illustrated in FIG. 4 as an object detection range. The object detection range (3) illustrated in FIG. 4 may be, for example, the same as or similar to the object detection range of radar specifically designed for cross traffic alert (CTA). For example, in the case of using the sensor 5 for an application or function of blind spot detection (BSD), the electronic device 1 according to an embodiment can perform object detection using a range (4) illustrated in FIG. 4 as an object detection range. The object detection range (4) illustrated in FIG. 4 may be, for example, the same as or similar to the object detection range of radar specifically designed for blind spot detection (BSD).

The electronic device 1 according to an embodiment may freely switch between a plurality of ranges from among, for example, the object detection ranges (1) to (4) illustrated in FIG. 4 to perform object detection. The plurality of ranges selected in this case may be determined based on an operation of the driver of the mobile body 100 or the like, or based on an instruction from the controller 10, the ECU 50, or the like, as mentioned above.

In the case where the electronic device 1 according to an embodiment performs object detection using a plurality of ranges from among the object detection ranges (1) to (4), the detection range determination unit 15 may determine the plurality of object detection ranges based on any information. After the detection range determination unit 15 determines the plurality of object detection ranges, the parameter setting unit 16 sets various parameters for performing the transmission of the transmission signal and the reception of the reception signal in the determined plurality of object detection ranges. The parameters set by the parameter setting unit 16 may be stored, for example, in the memory 40. The parameters set by the parameter setting unit 16 may include any of the transmission timing of the transmission waves, the frequency range of the transmission waves, the rate of change of the frequency of the transmission waves with respect to time, the cycle of the transmission waves, the time interval between the transmission timings of the transmission waves, the phase of the transmission waves, the amplitude of the transmitted waves, the strength of the transmitted waves, the information for selecting the antenna that transmits the transmitted waves, the transmission timing of the transmitted waves, and the information for selecting the antenna that receives the reception waves.

The parameters may be determined, for example, based on actual measurement in a test environment, before object detection by the electronic device 1. In the case where the parameters are not stored in the memory 40, the parameter setting unit 16 may estimate the parameters as appropriate based on predetermined data such as past measurement data. In the case where the parameters are not stored in the memory 40, the parameter setting unit 16 may acquire appropriate parameters through, for example, network connection to the outside.

Thus, in an embodiment, the controller 10 detects the object reflecting the transmission waves T based on the transmission signal transmitted as the transmission waves T and the reception signal received as the reflected waves R. Moreover, in an embodiment, the controller 10 makes the plurality of object detection ranges (e.g. the object detection ranges (1) to (4) in FIG. 4) by the transmission signal and the reception signal variable. In the present disclosure, the expression "make the plurality of object detection ranges variable" may denote that the plurality of object detection ranges are changed or that the plurality of object detection ranges are changeable.

In an embodiment, the controller 10 may switch between the plurality of object detection ranges. For example, when object detection is performed in the object detection range (3), the controller 10 may switch the range of object detection from the object detection range (3) to the object detection range (2). In an embodiment, the controller 10 may make the plurality of object detection ranges variable depending on at least one of the object detection purposes (e.g. parking assistance (PA) and blind spot detection (BSD)). In an embodiment, the controller 10 may make the plurality of object detection ranges variable with elapse of a short time, as described later. Such control will be described in detail later. The object detection purpose may be set by the user, set by the controller 10 based on the operation of the user, the state of the user, an instruction from outside, the surrounding environment, or the moving speed, or a combination thereof, or any other element, or set by any other appropriate method.

In an embodiment, the controller 10 may determine the plurality of object detection ranges based on an object detection result. For example, in the case where a certain object has already been detected as a result of object detection, the controller 10 may determine the plurality of object detection ranges depending on the position of the detected object. In an embodiment, the controller 10 may process only the transmission signal and the reception signal in any of the plurality of object detection ranges.

Thus, the electronic device 1 according to an embodiment can cutout (set and/or switch) the detection range in object detection by millimeter wave radar or the like. The electronic device 1 according to an embodiment can therefore flexibly respond to such a situation where it is desirable to detect an object in a plurality of object detection ranges. Moreover, the electronic device 1 according to an embodiment can set a wide object detection range beforehand, and cutout only information in a range that needs to be detected based on, for example, information of distance and/or angle detected by the electronic device 1. Hence, the electronic device 1 according to an embodiment can process information in the necessary detection range, without an increase of processing load. The electronic device 1 according to an embodiment can therefore improve the convenience in object detection.

The electronic device 1 according to an embodiment may not only make the object detection range by the transmission signal and the reception signal variable as illustrated in FIG. 4, but also aim the beam of the transmission waves T at the object detection range. This enables highly accurate object detection in the desired cutout range.

For example, the electronic device 1 according to an embodiment can select the object detection range (4) from the plurality of detection ranges illustrated in FIG. 4 and perform object detection for the application or function of blind spot detection (BSD), as described above. The electronic device 1 according to an embodiment may further form (beamforming) a beam of the transmission waves T transmitted from the plurality of transmission antennas 25, in the direction of the object detection range (4). For example, in the case of performing distant object detection, the object detection range can be covered with high accuracy by performing beamforming by the beam of the transmission waves transmitted from the plurality of transmission antennas 25 in the direction of the object detection range.

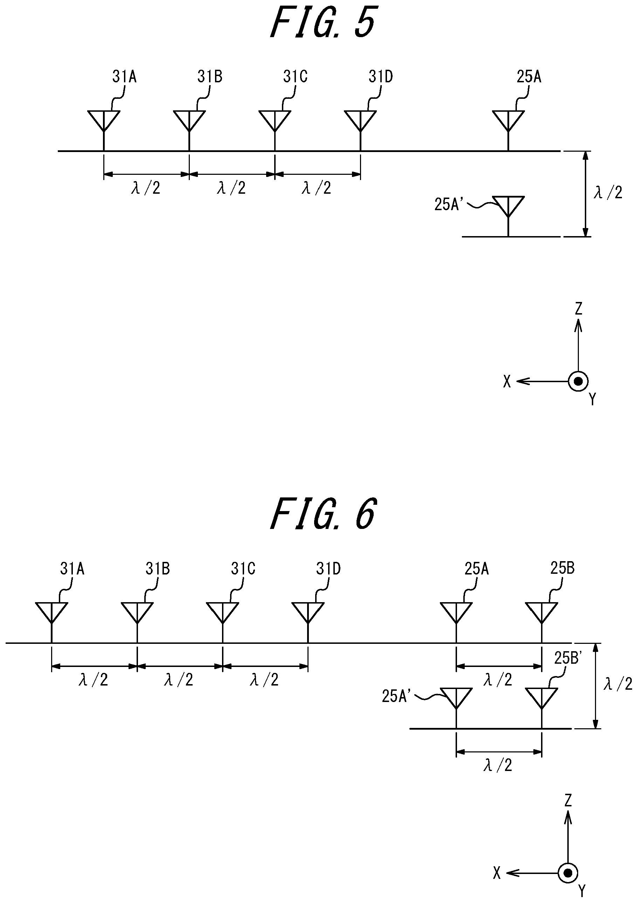

FIGS. 5 and 6 are each a diagram illustrating an example of arrangement of transmission antennas and reception antennas in the electronic device according to an embodiment. The directions of X-axis, Y-axis, and Z-axis in FIGS. 5 and 6 may be the same as the directions of X-axis, Y-axis, and Z-axis in FIG. 1.

For example, the sensor 5 in the electronic device 1 according to an embodiment may include two transmission antennas 25A and 25A', as illustrated in FIG. 5. The sensor 5 in the electronic device 1 according to an embodiment may also include four reception antennas 31A, 31B, 31C, and 31D, as illustrated in FIG. 5.

The four reception antennas 31A, 31B, 31C, and 31D are arranged at an interval λ/2 in the horizontal direction (X-axis direction), where λ is the wavelength of the transmission waves T. By aligning the plurality of reception antennas 31 in the horizontal direction and receiving the transmission waves T by the plurality of reception antennas 31, the electronic device 1 can estimate the direction in which the reflected waves R reach. For example, in the case where the frequency band of the transmission waves T is 77 GHz to 81 GHz, the wavelength λ of the transmission waves T may be the wavelength of the transmission waves T at the center frequency 79 GHz.

The two transmission antennas 25A and 25A' are arranged at an interval λ/2 in the vertical direction (Z-axis direction), where λ is the wavelength of the transmission waves T. By aligning the plurality of transmission antennas 25 in the vertical direction and transmitting the transmission waves T by the plurality of transmission antennas 25, the electronic device 1 can change the direction of the beam of the transmission waves T to the vertical direction.

The sensor 5 in the electronic device 1 according to an embodiment may include, for example, four transmission antennas 25A, 25A', 25B, and 25B', as illustrated in FIG. 6.

The two transmission antennas 25A and 25B are arranged at an interval λ/2 in the horizontal direction (X-axis direction) where λ is the wavelength of the transmission waves T, as illustrated in FIG. 6. The two transmission antennas 25A' and 25B' are arranged at an interval λ/2 in the horizontal direction (X-axis direction) where λ is the wavelength of the transmission waves T, as illustrated in FIG. 6. Thus, by aligning a plurality of transmission antennas 25 in the horizontal direction and transmitting the transmission waves T from the plurality of transmission antennas 25, the electronic device 1 can change the direction of the beam of the transmission waves T to the horizontal direction.

The two transmission antennas 25A and 25A' are arranged at an interval λ/2 in the vertical direction (Z-axis direction) where λ is the wavelength of the transmission waves T, as illustrated in FIG. 6. The two transmission antennas 25B and 25B' are arranged at an interval λ/2 in the vertical direction (Z-axis direction) where λ is the wavelength of the transmission waves T, as illustrated in FIG. 6. Thus, by aligning a plurality of transmission antennas 25 in the vertical direction and transmitting the transmission waves T from the plurality of transmission antennas 25 in the arrangement illustrated in FIG. 6, the electronic device 1 can change the direction of the beam of the transmission waves T to the vertical direction.

In the electronic device 1 according to an embodiment, in the case of beamforming the transmission waves T transmitted from the plurality of transmission antennas 25, the transmission waves T of the plurality of transmission antennas 25 may be in phase with each other in a predetermined direction based on the path difference when transmitting the transmission waves T of the plurality of transmission antennas 25. In the electronic device 1 according to an embodiment, for example, the phase controller 23 may control the phase of the transmission waves transmitted from at least one of the plurality of transmission antennas 25 so that the transmission waves T of the plurality of transmission antennas 25 will be in phase with each other in the predetermined direction.

The amount of phase controlled so that the plurality of transmission waves T will be in phase with each other in the predetermined direction may be stored in the memory 40 in association with the predetermined direction. That is, the relationship between the beam direction and the phase amount when performing beamforming may be stored in the memory 40.

The relationship may be determined, for example, based on actual measurement in a test environment, before object detection by the electronic device 1. In the case where the relationship is not stored in the memory 40, the phase controller 23 may estimate the relationship as appropriate based on predetermined data such as past measurement data. In the case where the relationship is not stored in the memory 40, the phase controller 23 may acquire an appropriate relationship through, for example, network connection to the outside.

In the electronic device 1 according to an embodiment, at least one of the controller 10 and the phase controller 23 may perform control to beamform the transmission waves T transmitted from the plurality of transmission antennas 25. In the electronic device 1 according to an embodiment, a functional part including at least the phase controller 23 is also referred to as "transmission controller".

Thus, in the electronic device 1 according to an embodiment, the transmission antenna 25 may include a plurality of transmission antennas. Moreover, in the electronic device 1 according to an embodiment, the reception antenna 31 may include a plurality of reception antennas. In the electronic device 1 according to an embodiment, the transmission controller (e.g. the phase controller 23) may perform control to form (beamforming) a beam of the transmission waves T transmitted from the plurality of transmission antennas 25 in the predetermined direction. In the electronic device 1 according to an embodiment, the transmission controller (e.g. the phase controller 23) may form the beam in the direction of the object detection range.

In the electronic device 1 according to an embodiment, the transmission antenna 25 may include a plurality of transmission antennas 25 arranged to include a vertical component, as mentioned above. In this case, in the electronic device 1 according to an embodiment, the phase controller 23 (transmission controller) may change the direction of the beam to the direction of the object detection range, including the vertical component.

Moreover, in the electronic device 1 according to an embodiment, the transmission antenna 25 may include a plurality of transmission antennas 25 arranged to include a horizontal component, as mentioned above. In this case, in the electronic device 1 according to an embodiment, the phase controller 23 (transmission controller) may change the direction of the beam to the direction of the object detection range, including the horizontal component.

In the electronic device 1 according to an embodiment, the transmission controller (e.g. the phase controller 23) may form the beam in a direction that covers at least part of the object detection range. In the electronic device 1 according to an embodiment, the transmission controller (e.g. the phase controller 23) may control the phase of the transmission waves transmitted from at least one of the plurality of transmission antennas 25 so that the transmission waves T of the plurality of transmission antennas 25 will be in phase with each other in the predetermined direction.

The electronic device 1 according to an embodiment can calculate a phase compensation value based on frequency information of a wide frequency band signal (e.g. FMCW signal) output from the plurality of transmitting antennas 25, and perform frequency-dependent phase compensation on each of the plurality of transmitting antennas. In this way, beamforming can be performed with high accuracy in a specific direction in all possible frequency bands of the transmission signal.

With such beamforming, the distance within which object detection is possible can be expanded in a specific direction in which object detection is required. Moreover, with such beamforming, a reflection signal from any unnecessary direction can be reduced. This improves the distance/angle detection accuracy.

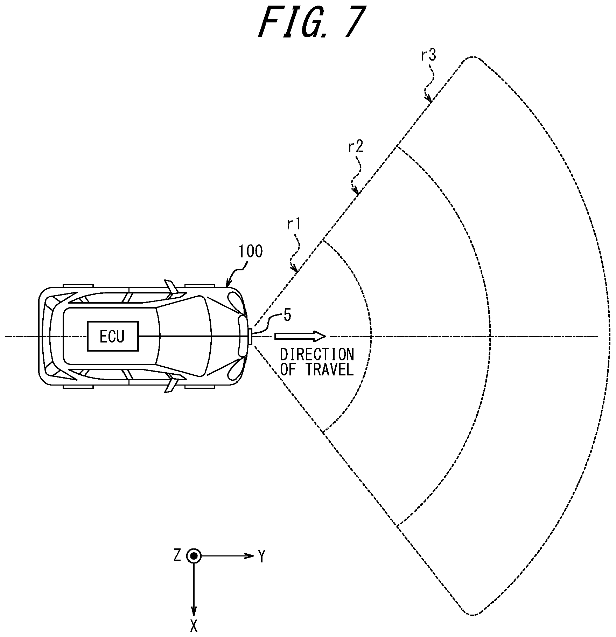

FIG. 7 is a diagram illustrating types of radar detection distances realized by the electronic device 1 according to an embodiment.

The electronic device 1 according to an embodiment is capable of performing object detection range cutout and/or transmission wave beamforming, as mentioned above. With use of at least one of object detection range cutout and transmission wave beamforming, the range of distance in which an object is detectable by the transmission signal and the reception signal can be defined.

For example, the electronic device 1 according to an embodiment can perform object detection in a range r1, as illustrated in FIG. 7. The range r1 illustrated in FIG. 7 may be, for example, a range in which object detection can be performed by ultra short range radar (USRR). For example, the electronic device 1 according to an embodiment can perform object detection in a range r2, as illustrated in FIG. 7. The range r2 illustrated in FIG. 7 may be, for example, a range in which object detection can be performed by short range radar (SRR). For example, the electronic device 1 according to an embodiment can perform object detection in a range r3, as illustrated in FIG. 7. The range r3 illustrated in FIG. 7 may be, for example, a range in which object detection can be performed by mid-range radar (MRR). As described above, the electronic device 1 according to an embodiment can perform object detection while switching, for example, the range among the ranges r1, r2, and r3 as appropriate. With such radar systems that differ in detection distance, the distance measurement accuracy tends to be lower when the detection distance is longer.

Thus, in the electronic device 1 according to an embodiment, the controller 10 may set the range of distance in which an object is detected by the transmission signal and the reception signal, depending on any of the plurality of object detection ranges.

A form in which any of the plurality of object detection ranges is set for, for example, each frame of the transmission waves T in the electronic device 1 according to an embodiment will be described below.

The electronic device 1 according to an embodiment may store the parameters defining the settings for performing the cutout of each object detection range, for example, in the memory 40. The electronic device 1 according to an embodiment may also store the parameters defining the settings for performing beamforming toward each object detection range, for example, in the memory 40. The electronic device 1 according to an embodiment may further store the parameters defining the settings for realizing each type of radar detection distance illustrated in FIG. 7, for example, in the memory 40.

The electronic device 1 according to an embodiment sets (assigns) an operation for achieving any of a plurality of types of radar functions, for example, for each short time section such as a frame of the transmission waves T. The following will describe an example of setting an operation for achieving a different radar function of three types of radar, for example, for each short time section such as a frame of the transmission waves T.

The three types of radar are hereafter referred to as "radar 1", "radar 2", and "radar 3" respectively, for convenience's sake. These "radar 1", "radar 2", and "radar 3" are each distinguished by a parameter defining an operation for achieving the function as the different radar. That is, "radar 1", "radar 2", and "radar 3" may differ from each other in the object detection range. Such different types of radar may be defined, for example, by different parameters. Moreover, "radar 1", "radar 2", and "radar 3" may differ from each other in whether beamforming is performed and the direction of beamforming in the case where beamforming is performed. Such different types of radar may be defined, for example, by different parameters. Further, "radar 1", "radar 2", and "radar 3" may differ from each other in the type of radar detection distance illustrated in FIG. 7. Such different types of radar may be defined, for example, by different parameters.

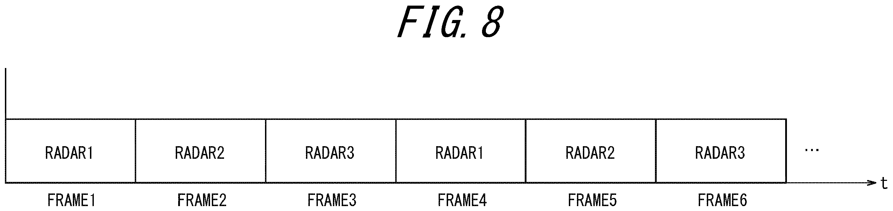

FIGS. 8 to 10 are each a diagram illustrating how a different type of radar function is set (assigned) for each frame or the like of the transmission waves T.

FIG. 8 is a diagram illustrating frames of the transmission waves T, as in FIG. 3. Although frames 1 to 6 of the transmission waves T are illustrated in the example in FIG. 8, subsequent frames may follow. Each frame illustrated in FIG. 8 may include, for example, 16 subframes, as in the frame 1 illustrated in FIG. 3. In this case, each of the subframes may include, for example, eight chirp signals, as in each subframe illustrated in FIG. 3.

For example, the electronic device 1 according to an embodiment may set (assign) a different radar function for each of one or more frames of the transmission waves T, as illustrated in FIG. 8. For example, the electronic device 1 according to an embodiment may set any of the plurality of object detection ranges for each frame of the transmission waves T. For example, the electronic device 1 according to an embodiment may set any of the plurality of object detection ranges for each frame of the transmission waves T each composed of one or more frames. Thus, in the electronic device 1 according to an embodiment, the controller 10 may set any of the plurality of object detection ranges for each frame of the transmission waves. In the electronic device 1 according to an embodiment, the controller 10 may switch among the plurality of object detection ranges for each frame of the transmission waves T and perform the transmission of the transmission signal and the reception of the reception signal. In the example illustrated in FIG. 8, the function of radar 1 is set in the frame 1 of the transmission waves T, the function of radar 2 is set in the frame 2 of the transmission waves T, and the function of radar 3 is set in the frame 3 of the transmission waves T. Subsequently, the same functions are set repeatedly. In an embodiment, each frame of the transmission waves T may be, for example, on the order of tens of microseconds. Hence, the electronic device 1 according to an embodiment functions as different radar at very short time intervals. The electronic device 1 according to an embodiment thus operates as if to simultaneously achieve a plurality of functions or applications by one radar sensor. In the case where the electronic device 1 according to an embodiment sets a radar function for each frame of the transmission waves T, the radar function in each frame of the transmission waves T may be partly or wholly the same function. In the present disclosure, the pattern of the radar functions set in the frames of the transmission waves T is not limited to the pattern illustrated in FIG. 8, and may be an appropriate pattern.

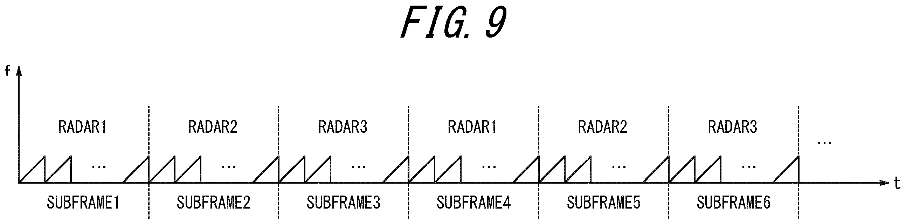

FIG. 9 is a diagram illustrating subframes included in a frame of the transmission waves T, as in FIG. 3. Although subframes 1 to 6 of the transmission waves T are illustrated in the example in FIG. 9, subsequent subframes may follow. The subframes 1 to 6 illustrated in FIG. 9 may be part of the 16 subframes included in the frame 1 illustrated in FIG. 3. For example, each subframe illustrated in FIG. 9 may include eight chirp signals, as in the subframes illustrated in FIG. 3.

For example, the electronic device 1 according to an embodiment may set (assign) a different radar function in each subframe of the transmission waves T, as illustrated in FIG. 9. For example, the electronic device 1 according to an embodiment may set any of the plurality of object detection ranges for each subframe of the transmission waves T. Thus, in the electronic device 1 according to an embodiment, the controller 10 may set any of the plurality of object detection ranges by the transmission signal and the reception signal, for each portion (e.g. subframe) constituting a frame of the transmission waves T. In the example illustrated in FIG. 9, the function of radar 1 is set in the subframe 1 of the transmission waves T, the function of radar 2 is set in the subframe 2 of the transmission waves T, and the function of radar 3 is set in the subframe 3 of the transmission waves T. Subsequently, the same functions are set repeatedly. In an embodiment, each subframe of the transmission waves T may be, for example, shorter in time than one frame. Hence, the electronic device 1 according to an embodiment functions as different radar at shorter time intervals. The electronic device 1 according to an embodiment thus operates as if to simultaneously achieve a plurality of functions or applications by one radar sensor. In the case where the electronic device 1 according to an embodiment sets a radar function for each subframe of the transmission waves T, the radar function in each subframe of the transmission waves T may be partly or wholly the same function. In the present disclosure, the pattern of the radar functions set in the subframes of the transmission waves T is not limited to the pattern illustrated in FIG. 9, and may be an appropriate pattern.

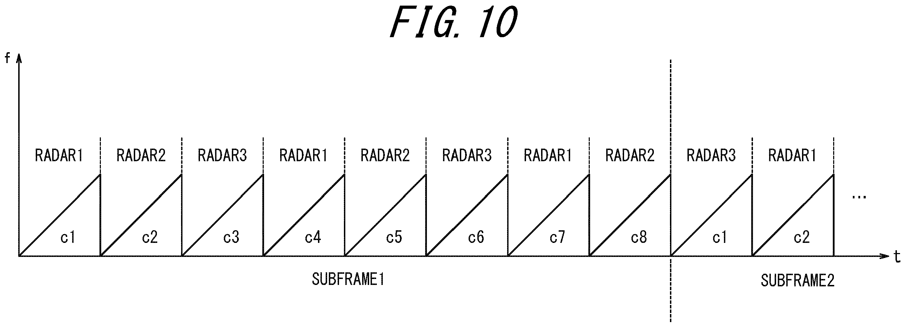

FIG. 10 is a diagram illustrating chirp signals included in a subframe of the transmission waves T, as in FIG. 3. Although a subframe 1 to part of a subframe 2 of the transmission waves T are illustrated in the example in FIG. 10, subsequent subframes may equally follow the subframe 1. The subframe 1 illustrated in FIG. 10 may include eight chirp signals, as in the subframe 1 illustrated in FIG. 3. The chirp signals illustrated in FIG. 10 may be the same as the eight chirp signals included in each subframe illustrated in FIG. 3.

For example, the electronic device 1 according to an embodiment may set (assign) a different radar function in each of one or more chirp signals included in a subframe of the transmission waves T, as illustrated in FIG. 10. For example, the electronic device 1 according to an embodiment may set any of the plurality of object detection ranges for each chirp signal of the transmission waves T. For example, the electronic device 1 according to an embodiment may set any of the plurality of object detection ranges for each chirp signal of the transmission waves T each composed of any number of one or more chirp signals. Thus, in the electronic device 1 according to an embodiment, the controller 10 may set any of the plurality of object detection ranges by the transmission signal and the reception signal, for each chirp signal of the transmission waves T. In the example illustrated in FIG. 10, the function of radar 1 is set in the chirp signal c1 of the transmission waves T, the function of radar 2 is set in the chirp signal c2 of the transmission waves T, and the function of radar 3 is set in the chirp signal c3 of the transmission waves T. Subsequently, the same functions are set repeatedly. In an embodiment, each chirp signal of the transmission waves T may be, for example, shorter in time than one subframe. Hence, the electronic device 1 according to an embodiment functions as different radar at shorter time intervals. The electronic device 1 according to an embodiment thus operates as if to simultaneously achieve a plurality of functions or applications by one radar sensor. In the case where the electronic device 1 according to an embodiment sets a radar function for each chirp signal of the transmission waves T, the radar function in each chirp signal of the transmission waves T may be partly or wholly the same function. In the present disclosure, the pattern of the radar functions set in the chirp signals of the transmission waves T is not limited to the pattern illustrated in FIG. 10, and may be an appropriate pattern. In FIGS. 8 to 10, the radar functions set in the frames, the subframes, or the chirp signals are radar function 1, radar function 2, and radar function 3. In the present disclosure, however, the number and/or types of radar functions set in the frames, the subframes, or the chirp signals are not limited to such, and may be any number and/or types. For example, in the present disclosure, the number of radar functions set in the frames, the subframes, or the chirp signals may be two, or four or more. In the present disclosure, the types of radar functions set in the frames, the subframes, or the chirp signals may be radar functions for realizing PA, FSD, BSD, CTA, Rear-CTA, etc.

As described above, the electronic device 1 according to an embodiment can cutout a detection range and perform beamforming in the direction of the cutout detection range, depending on any of various applications or functions. The electronic device 1 according to an embodiment can also freely switch the detection range cutout and the beamforming in the direction of the cutout detection range. Hence, for example, one radar sensor can be dynamically switched between a plurality of applications or functions and used. The electronic device 1 according to an embodiment can therefore improve the convenience in object detection. Moreover, the electronic device 1 according to an embodiment not only achieves highly accurate object detection but also has a considerable cost advantage.

The electronic device 1 according to an embodiment can change the application and function of one sensor, by appropriately changing the direction of the beam of the transmission waves transmitted from the plurality of transmission antennas or switching the object detection range. In other words, the electronic device 1 according to an embodiment can change the application and function of one sensor depending on the object detection purpose, by appropriately changing the direction of the beam of the transmission waves transmitted from the plurality of transmission antennas or switching the object detection range. The electronic device 1 according to an embodiment can detect only a specific part in the range of transmission of the transmission waves T, so that an increase of the amount of information processed is prevented. With the electronic device 1 according to an embodiment, the possibility of erroneously detecting an unnecessary object as a target object is reduced, with it being possible to improve the detection reliability.

The electronic device 1 according to an embodiment can perform object detection using one sensor 5 as if it were a plurality of sensors. Thus, with the electronic device 1 according to an embodiment, an increase of the weight of the vehicle (particularly the harness) is prevented. The electronic device 1 according to an embodiment can therefore prevent a decrease in fuel efficiency due to an increase in the number of sensors 5 or a decrease in fuel efficiency due to an increase in power consumption.

The electronic device 1 according to an embodiment can integrate the functions of a plurality of radar sensors into one sensor. Hence, a delay that may occur between a plurality of sensors can be avoided. The problem in that it takes an excessive processing time when performing automatic driving, driving assistance, or the like can also be avoided. Furthermore, with the electronic device 1 according to an embodiment, complex control as in the case of performing detection using a plurality of sensors with different object detection ranges can be avoided.

Conventionally, in the case of performing object detection in a plurality of object detection ranges, a plurality of sensors each having a unique object detection range are used to enable the detection. It is conventionally difficult to, for example, accurately detect an object at a short distance and simultaneously detect an object at a long distance using one sensor.

The electronic device 1 according to an embodiment can perform object detection in a plurality of object detection ranges using one sensor. The electronic device 1 according to an embodiment can also operate as if to simultaneously perform object detection in the plurality of object detection ranges.

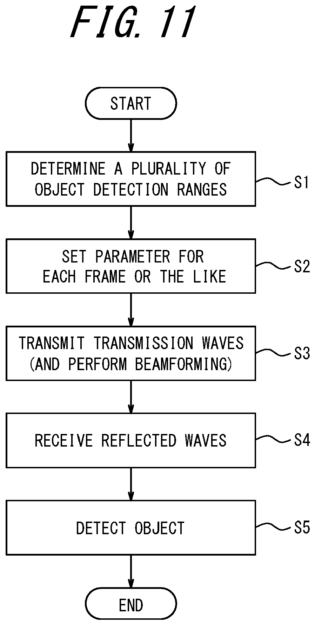

FIG. 11 is a flowchart illustrating operation of the electronic device according to an embodiment. The flow of operation of the electronic device according to an embodiment will be described below.

The operation illustrated in FIG. 11 may be started, for example, when detecting an object around the mobile body 100 by the electronic device 1 mounted in the mobile body 100.

After the operation illustrated in FIG. 11 starts, the detection range determination unit 15 in the controller 10 determines a plurality of object detection ranges that are selectively used (step S1). For example, in step S1, the detection range determination unit 15 may determine a plurality of ranges from among the object detection ranges (1) to (4) illustrated in FIG. 4, as the object detection ranges. In step S1, the detection range determination unit 15 may determine the plurality of object detection ranges based on, for example, an operation of the driver of the mobile body 100 or an instruction of the controller 10 or the ECU 50.

The operation in step S1 may be not an operation performed for the first time after the start of the operation illustrated in FIG. 11, but an operation performed again after the operation illustrated in FIG. 11 has already been performed. In the case where, at the time when step S1 is performed again, there is already a result of detection of an object by the object detector 14, the detection range determination unit 15 may determine the plurality of object detection ranges based on the position of the detected object.

After the plurality of object detection ranges are determined in step S1, the parameter setting unit 16 sets various parameters in the electronic device 1 for each frame or the like of the transmission waves T to perform object detection in the determined plurality of object detection ranges (step S2). For example, in step S2, the parameter setting unit 16 sets the parameters for each frame or the like of the transmission waves T so that the plurality of ranges from among the object detection ranges (1) to (4) illustrated in FIG. 4 will be cutout as the object detection ranges to perform object detection. In step S2, the parameters may be set for each frame of the transmission waves T, set for each portion (e.g. subframe) constituting the frame, or set for each chirp signal, as illustrated in FIGS. 8 to 10. The parameters set to cutout each object detection range and perform object detection may be, for example, stored in the memory 40. In this case, the parameter setting unit 16 may read the parameters from the memory 40 and set the parameters in step S2. In step S2, the parameter setting unit 16 may set, for example, the parameters for the object detector 14. In the present disclosure, in step S2, the parameters may be set for each frame of the transmission waves T, set for each portion (e.g. subframe) constituting the frame, or set for each chirp signal, as illustrated in FIGS. 8 to 10. The parameters may be set for any combination thereof.

In step S2, the parameter setting unit 16 may set various parameters for each frame or the like of the transmission waves T so as to form a beam of transmission waves in the direction of each determined object detection range. For example, in step S2, the parameter setting unit 16 sets the parameters for each frame or the like of the transmission waves T so as to aim the beam of transmission waves at the object detection range determined in step S1. The parameters set to aim the beam of transmission waves at each object detection range may be, for example, stored in the memory 40. In this case, the parameter setting unit 16 may read the parameters from the memory 40 and set the parameters in step S2. In step S2, for example, the parameter setting unit 16 may set the parameters for each frame or the like of the transmission waves T, for the phase controller 23 (transmission controller) or the transmitter 20.

Thus, in the electronic device 1 according to an embodiment, the parameter setting unit 16 in the controller 10 may set the parameters defining any of the plurality of object detection ranges by the transmission signal and the reception signal, for each frame or the like of the transmission waves T. The parameter setting unit 16 may also switch the radar type between the radar types of different detection ranges for each frame or for each processing unit in the frame, and notify the signal generator 21 of the radar type.

After the parameters are set in step S2, the controller 10 performs control to transmit the transmission waves T from the transmission antenna 25, in the order of the frames or the like of the transmission waves T (step S3). For example, in step S3, the signal generator 21 may generate a transmission signal to function as each type of radar based on the parameters set by the parameter setting unit 16, in the order of the frames or the like of the transmission waves T. In the case of performing beamforming of the transmission waves T, in step S3, the phase controller 23 (transmission controller) performs control so that the transmission waves T transmitted from the plurality of transmission antennas 25 will form a beam in a predetermined direction, in the order of the frames or the like of the transmission waves T. Here, the phase controller 23 (transmission controller) may control the phase of the transmission waves T. The phase controller 23 (transmission controller) may also perform control to aim the beam of the transmission waves T in the direction of the object detection range determined in step S1 so as to cover, for example, at least part of the object detection range, in the order of the frames or the like of the transmission waves T.

After the transmission waves T are transmitted in step S3, the controller 10 performs control to receive the reflected waves R by the reception antenna 31 (step S4).

After the reflected waves R are received in step S4, the controller 10 detects an object present around the mobile body 100 (step S5). In step S5, the object detector 14 in the controller 10 may perform object detection in the object detection range determined in step S1 (object detection range cutout). In step S5, the object detector 14 in the controller 10 may detect an object based on an estimation result of at least one of the distance FFT processor 11, the speed FFT processor 12, and the arrival angle estimation unit 13.

In the electronic device 1 according to an embodiment, for example, the object detector 14 in the controller 10 may perform an object detection (e.g. clustering) process from information of angle, speed, and distance obtained for each of the plurality of different types of radar, and calculate the average power of the points forming the object. In the electronic device 1 according to an embodiment, the object detector 14 may notify a host control CPU such as the ECU 50 of the object detection information or point cloud information obtained for each of the plurality of different types of radar.

Since the object detection in step S5 can be performed using a known millimeter wave radar technique according to any of various algorithms, more detailed description is omitted. After step S5 in FIG. 11, the controller 10 may perform step S1 again. In this case, in step S1, object detection ranges may be determined based on the result of object detection in step S5. Thus, in the electronic device 1 according to an embodiment, the controller 10 may detect the object reflecting the transmission waves T based on the transmission signal transmitted as the transmission waves T and the reception signal received as the reflected waves R.

In the foregoing embodiment, any of the plurality of ranges of detecting objects by the transmission signal and the reception signal is set, for example, for each frame, for each subframe, or for each chirp signal. In an embodiment, for example, at least any of the plurality of ranges of detecting objects by the transmission signal and the reception signal may be set in frames or subframes with a greater degree of freedom. This embodiment will be described below.

In the embodiment illustrated in FIG. 10, a different radar function is set (assigned) for each chirp signal included in the subframe of the transmission waves T. In FIG. 10, the function of radar 1 is set in the chirp signal c1, the function of radar 2 is set in the chirp signal c2, and the function of radar 3 is set in the chirp signal c3. Subsequently, the same functions are set repeatedly. In the example illustrated in FIG. 10, each chirp signal has the same time length. In the present disclosure, the time length of a chirp signal may be a time length from when the frequency of the chirp signal transmitted increases from 0 to when the frequency returns to 0. In the present disclosure, the time length of a chirp signal may be the cycle T of the chirp signal transmitted. In the example illustrated in FIG. 10, each chirp signal has the same maximum frequency. Therefore, each chirp signal has the same frequency gradient. In the example illustrated in FIG. 10, the chirp signals have no gap, i.e. no temporal space, therebetween, in the subframe or the frame. However, in an embodiment, when assigning a different radar function to each chirp signal, the structure of the chirp signals need not necessarily be the structure illustrated in FIG. 10. In the example illustrated in FIG. 10, each chirp signal may have the same time length or a different time length. In the example illustrated in FIG. 10, each chirp signal may have the same maximum frequency or a different maximum frequency. In the example illustrated in FIG. 10, each chirp signal may have the same frequency gradient or a different frequency gradient.

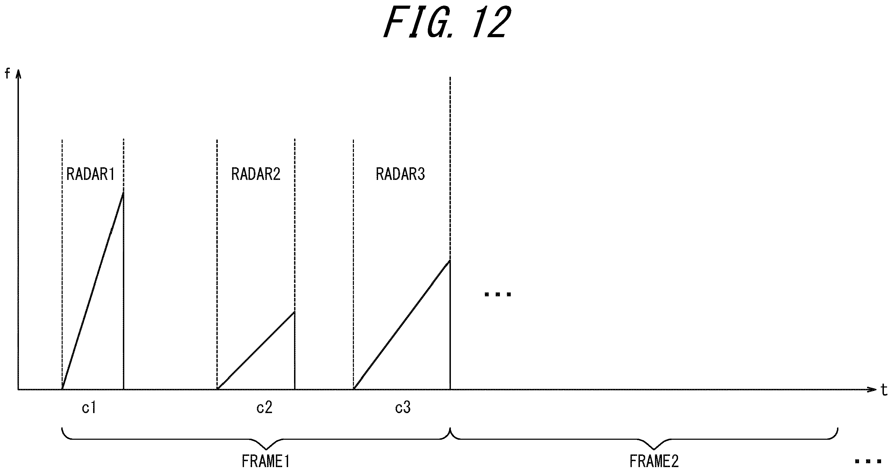

FIG. 12 is a diagram illustrating an example in which the electronic device 1 according to an embodiment sets object detection ranges in each frame. As illustrated in FIG. 12, for example, the controller 10 in the electronic device according to an embodiment may arrange different chirp signals in a frame. In FIG. 12, the function of radar 1 is set in the chirp signal c1, the function of radar 2 is set in the chirp signal c2, and the function of radar 3 is set in the chirp signal c3, as in FIG. 10. In FIG. 12, on the other hand, the chirp signals have a gap, i.e. a temporal space, therebetween. In particular, in FIG. 12, the chirp signal c1 does not start from the beginning of the frame 1. Moreover, in the example illustrated in FIG. 12, each chirp signal does not have the same time length. In the example illustrated in FIG. 12, each chirp signal does not have the same maximum frequency. Therefore, each chirp signal does not have the same frequency gradient. The chirp signals illustrated in FIG. 12 are an example. The electronic device 1 according to an embodiment may appropriately arrange chirp signals having any lengths and any frequency bands in each frame. The controller 10 in the electronic device according to an embodiment of the present disclosure may use any combination of different chirp signals such as those illustrated in FIG. 12 and the same chirp signals, as the chirp signals in the frame.

In the example illustrated in FIG. 12, the same structure of the chirp signals as in the frame 1 may be repeated from the frame 2 onward, or chirp signals different from those in the frame 1 may be arranged from the frame 2 onward. In the example illustrated in FIG. 12, different chirp signals may be arranged in each frame from the frame 2.

Of the chirp signals in the frame 1 in FIG. 12, the chirp signal c1 has the highest maximum frequency, and the chirp signal c2 has the lowest maximum frequency. Of the chirp signals in the frame 1 in FIG. 12, the chirp signal c1 has a relatively short time, and the chirp signals c2 and c3 each have a relatively long time. If the time of the chirp signal is longer, the power is greater, so that the object detection accuracy can be improved. If the frequency band of the chirp signal is wider, the object detection accuracy can be improved, too.

Thus, the controller 10 in the electronic device 1 according to an embodiment may set at least any of the plurality of ranges of detecting objects by the transmission signal and the reception signal in each frame of the transmission waves. As described above, in an embodiment, at least any of the plurality of ranges of detecting objects may be set in, for example, in each frame or subframe with a greater degree of freedom. FIG. 12 illustrates an example in which at least any of the plurality of ranges of detecting objects are set in each frame with a greater degree of freedom. Alternatively, the controller 10 in the electronic device 1 according to an embodiment may set at least any of the plurality of ranges of detecting objects in each subframe with a greater degree of freedom.

### (Another embodiment)

An electronic device according to another embodiment will be described below. The electronic device according to another embodiment performs calibration on transmission waves based on a transmission signal and a reception signal.

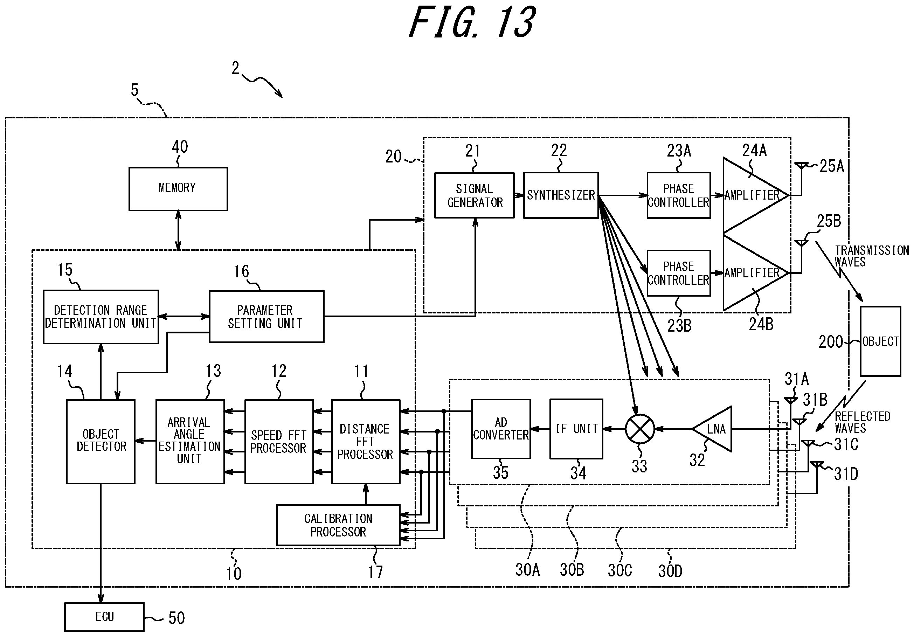

FIG. 13 is a functional block diagram schematically illustrating an example of the structure of the electronic device according to another embodiment. The example of the structure of the electronic device according to this embodiment will be described below.

As illustrated in FIG. 13, an electronic device 2 according to another embodiment may have the same structure as the electronic device 1 illustrated in FIG. 2, except the following: The electronic device 2 according to another embodiment includes a calibration processor 17 in addition to the electronic device 1 illustrated in FIG. 2, as illustrated in FIG. 13. The description of the parts same as or similar to those described with reference to FIG. 2 will be simplified or omitted as appropriate.

The calibration processor 17 performs a calibration process based on the beat signal digitized by the AD converter 35. That is, the calibration processor 17 performs calibration on the transmission waves based on the transmission signal and the reception signal. The signal subjected to the calibration process by the calibration processor 17 may be supplied to the distance FFT processor 11.

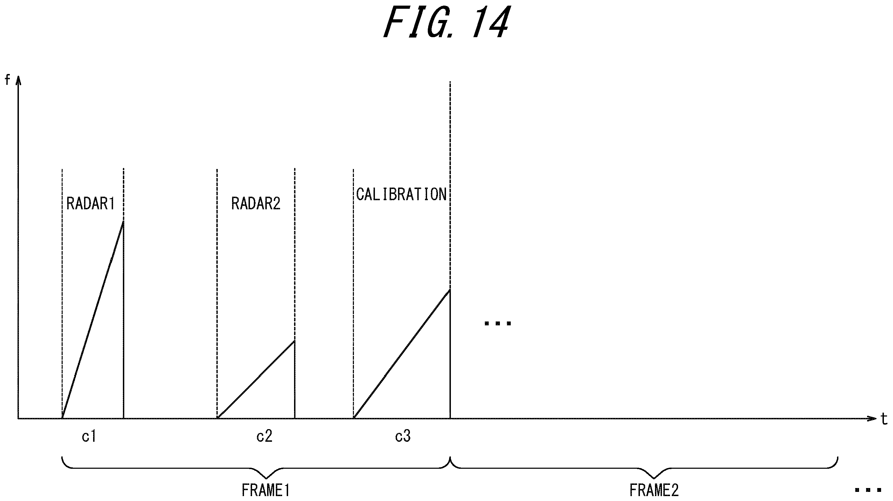

FIG. 14 is a diagram illustrating an example of the structure of a frame in another embodiment.

FIG. 14 is a diagram illustrating an example in which the electronic device 2 according to another embodiment sets a chirp signal used for calibration together with object detection ranges in each frame. As illustrated in FIG. 14, for example, the controller 10 in the electronic device 2 according to an embodiment may arrange different chirp signals in a frame. In FIG. 14, the function of radar 1 is set in the chirp signal c1, and the function of radar 2 is set in the chirp signal c2. In FIG. 14, the chirp signal c3 is assigned as a chirp signal used for calibration. The chirp signals illustrated in FIG. 14 are an example. The electronic device 2 according to an embodiment may appropriately arrange chirp signals having any lengths and any frequency bands in each frame.

For example, in FIG. 14, the chirp signal c3 used for calibration may be located at any position in the frame. The chirp signal c3 used for calibration may have any length. The chirp signal c3 used for calibration may have any maximum frequency. Therefore, the chirp signal c3 used for calibration may have any frequency gradient.

In the example illustrated in FIG. 14, the number of chirp signals c3 used for calibration is one. However, any number of chirp signals c3 used for calibration may be provided in each frame. In the example illustrated in FIG. 14, two or more chirp signals used for calibration may be provided in the frame 1. In the example illustrated in FIG. 14, a chirp signal used for calibration may be provided not in the frame 1 but in the frame 2 or subsequent frames.

In the case where high measurement accuracy is required of the sensor 5, a relatively large number of chirp signals used for calibration may be provided. In the case where high measurement accuracy is not required of the sensor 5, a relatively small number of chirp signals used for calibration may be provided. For example, a chirp signal used for calibration may be provided in every other frame. For example, a chirp signal used for calibration may be provided in every five frames or in every ten frames.

In the example illustrated in FIG. 14, the same structure of the chirp signals as in the frame 1 may be repeated from the frame 2 onward, or chirp signals different from those in the frame 1 may be arranged from the frame 2 onward. In the example illustrated in FIG. 14, different chirp signals may be arranged in each frame from the frame 2.

Thus, the controller 10 in the electronic device 2 according to another embodiment includes the chirp signal for performing the calibration process in a frame or a subframe. That is, the controller 10 in the electronic device 2 sets (assigns) the chirp signal for performing the calibration process (signal used for calibration) in the frame or the subframe. The controller 10 in the electronic device 2 performs calibration using the signal included in the frame or the subframe.

A typical radar sensor has a function of calculating at least one of the distance, the relative speed, and the angle to an object to be detected, as mentioned above. Meanwhile, the typical radar sensor has the following factors that can lead to errors. For example, regarding the distance, there is a possibility of an error due to a deviation of the position at which the radar sensor is mounted (the mounting depth from the vehicle surface) and/or the clock frequency inside the radar sensor. Regarding the relative speed, there is a possibility of an error of the vehicle speedometer and/or an error due to a deviation of the clock frequency inside the radar sensor. Regarding the angle, there is a possibility of an error due to a deviation of the angle at which the radar sensor is mounted and/or a deviation of the shape/spacing of the antennas during manufacture.

The error of the angle will be described in detail below. The angle detected by the radar sensor is calculated with respect to the angle at which the radar sensor is mounted in the vehicle. For example, suppose the angle estimated by the radar sensor is 10° from the reference angle of the vehicle, assuming that the mounting angle of the radar sensor is 5° from the reference angle of the vehicle. In this case, the radar sensor recognizes that the angle of the object is 15° with respect to the vehicle. On the other hand, for example, suppose the angle estimated by the radar sensor is 10° from the reference angle of the vehicle, assuming that the mounting angle of the radar sensor is 7° from the reference angle of the vehicle. In this case, the radar sensor recognizes that the angle of the object is 17° with respect to the vehicle. Such a deviation of the mounting angle is difficult to be completely suppressed, and basically involves an initial deviation and/or an aging deviation.

In view of this, for example, the electronic device 2 according to another embodiment performs the calibration process during operation, in order to reduce the influence of the deviation. The calibration process performed by the calibration processor 17 may be, for example, a correction function for accurately maintaining the object detection function of the electronic device 2. The calibration process will be described below.

The radar such as the sensor 5 is mainly intended to detect an object that may collide with the mobile body such as a vehicle in which the radar is mounted during running of the mobile body. However, the radar such as the sensor 5 can also detect an object having a relatively low risk of collision during running of the mobile body, such as a guardrail and a utility pole. When such an object is detected by the radar, the object is recognized as an object moving in a direction same as and opposite to the moving direction of the mobile body.

For example, the electronic device 2 according to another embodiment performs calibration using the chirp signal c3 illustrated in FIG. 14. Specifically, the electronic device 2 transmits transmission waves such as the chirp signal c3 illustrated in FIG. 14 from the transmission antenna 25, and receives reflected waves reflected off a guardrail as an example by the reception antenna 31. The calibration processor 17 may compare a beat signal digitized by the AD converter 35 with information of the known object (guardrail) stored in the memory 40. Here, the calibration processor 17 may perform comparison with the trajectory (known data) of the object that is supposed to be detected, based on the mounting angle of the transmission antenna 25 (and the reception antenna 31) in the sensor 5. Based on the comparison result, the calibration processor 17 may correct various parameters used in each process.

Moreover, for example, the electronic device 2 according to another embodiment may have a predetermined reflector or the like installed in the radar cover, the housing of the sensor 5, or the like. Information of at least one of the installation position and/or angle of the predetermined reflector and the reflectance of the material forming the reflector may be stored in the memory 40 beforehand. Then, the electronic device 2 according to another embodiment transmits transmission waves such as the chirp signal c3 illustrated in FIG. 14 from the transmission antenna 25, and receives reflected waves reflected off the predetermined reflector by the reception antenna 31. The calibration processor 17 may compare a beat signal digitized by the AD converter 35 with the information of the known object (predetermined reflector) stored in the memory 40. Here, the calibration processor 17 may perform comparison with the trajectory (known data) of the object that is supposed to be detected, based on the mounting angle of the transmission antenna 25 (and the reception antenna 31) in the sensor 5. Based on the comparison result, the calibration processor 17 may correct various parameters used in each process.

Thus, for example, the electronic device 2 according to another embodiment may perform the calibration process within the time of one frame. For example, the electronic device 2 according to another embodiment may perform the calibration process within the time of each frame or each subframe. In the case of repeatedly performing the calibration process in this way, statistical processing such as averaging the processing results may be performed. With such statistical processing, the accuracy of detection by the radar function of the electronic device 2 can be expected to gradually increase as a result of repeating the calibration process. When performing statistical processing, any detection result that can be regarded as noise may be excluded.

Thus, in the electronic device 2 according to another embodiment, the controller 10 sets at least any of the plurality of ranges of detecting objects by the transmission signal and the reception signal, in the frame of the transmission waves. In the electronic device 2 according to another embodiment, the controller 10 may include the signal used for calibration in the frame. In the electronic device 2 according to another embodiment, the controller 10 may perform calibration using the signal included in the frame.

The above embodiment describes the case where the calibration process performed by the electronic device 2 involves calibration on the plane arrival angle θ (e.g. the angle in the XY plane illustrated in FIG. 1). That is, the electronic device 2 can perform calibration on the mounting angle of the transmission antenna 25 (and the reception antenna 31) in the sensor 5, based on the detected arrival angle θ. Alternatively, in another embodiment, the electronic device 2 may perform other calibration. For example, in another embodiment, the electronic device 2 may perform calibration on the mounting angle of the transmission antenna 25 (and the reception antenna 31) in the sensor 5 in the vertical direction (e.g. Z-axis direction illustrated in FIG. 1). Moreover, if possible, the electronic device 2 according to another embodiment may perform calibration based on the position of the detected object and/or the relative speed with respect to the detected object, as an example. For example, in another embodiment, the electronic device 2 may perform calibration on the power of the transmission waves transmitted from the transmission antenna 25.

Examples of techniques of detecting obstacles and the like around vehicles using millimeter wave radar include blind spot detection (BSD), lateral direction detection (cross traffic alert: CTA) during reversing or departure, rear cross traffic alert (rear-CTA), free space detection (FSD), and parking assistance (PA). In these types of detection, typically a radio wave radiation range that depends on the physical shape of antennas of millimeter wave radar is set beforehand to determine an object detection range. In detail, in typical specifications, for each radar system, the physical shape of antennas of millimeter wave radar is predetermined depending on the purpose, application, function, etc. of the radar, and an object detection range is predefined. Therefore, a plurality of different radar sensors are needed in order to achieve a plurality of different radar functions.

It is, however, disadvantageous in terms of cost to prepare a plurality of radar sensors for different purposes, applications, or functions. Moreover, for example, when the physical shape of the antennas is predetermined and the radiation range is predetermined, it is difficult to change the application and function of the antennas. For example, in the case where the physical shape and radiation range of the antenna are predetermined and all target objects in the radiation range are detected, the amount of information to be processed increases. In such a case, there is a possibility that unnecessary objects are erroneously detected as target objects. This can cause a decrease in detection reliability. Moreover, for example, in the case where the physical shape and radiation range of the antennas are predetermined and the number of sensors installed is increased, the fuel efficiency may decrease due to an increase of the weight of the vehicle (mainly the harness) or an increase of the power consumption. Further, if detection is performed using the plurality of radar sensors, a delay can occur between the sensors. When automatic driving, driving assistance, or the like is performed based on such detection, processing is likely to take time. This is because the CAN processing speed is slower than the radar update rate, and also feedback requires time. If detection is performed using a plurality of sensors with different object detection ranges, control tends to be complex.

Hence, the electronic device 1 according to an embodiment enables one radar sensor to be used for a plurality of purposes, functions, or applications.

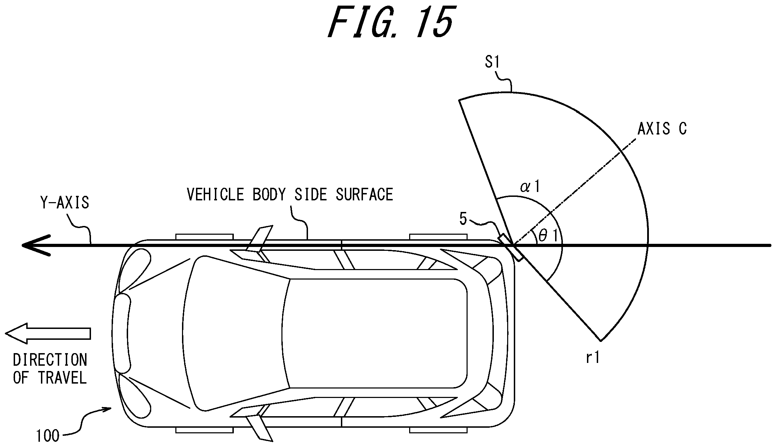

An example of an object detection range used in each embodiment of the present disclosure will be described below, with reference to FIGS. 15 to 18. FIGS. 15 to 18 are each a conceptual diagram illustrating an example of an object detection range used in an electronic device according to an embodiment of the present disclosure.

FIG. 15 illustrates a detection range S1 of the sensor 5 in the case of performing parking assistance (PA). The sensor 5 is located at the back right end of the mobile body 100. The position of the sensor 5 is not limited to the back right end of the mobile body 100, and may be any other position such as the back left end. The number of sensors 5 may be any number greater than or equal to 1. In FIG. 15, a horizontal axis passing through the sensor 5 in a direction approximately parallel to the direction of travel in the case where the mobile body 100 travels in a straight line is the Y-axis. An angle counterclockwise from the Y-axis is an angle in the outward direction. The direction approximately parallel to the direction of travel in the case where the mobile body 100 travels in a straight line may be, for example, a direction approximately parallel to a vehicle body side surface of the mobile body 100.

In the case of parking assistance (PA) in FIG. 15, the range S1 of the transmission waves of the sensor 5 may be such that the angle θ1 of axis C passing through the center of the transmission range S1 with respect to the Y-axis when the sensor 5 including the transmission antenna is seen from above in the vertical direction is 45° from the Y-axis in the outward direction. In the case of parking assistance (PA) in FIG. 15, the range S1 of the transmission waves of the sensor 5 may be such that the distance r1 from the sensor 5 is less than or equal to 10 m at the maximum. The angle range α1 of the transmission range S1 is 160°. These numeric values described with reference to FIG. 15 may be changed to other values as appropriate. For example, θ1 may be a numeric value other than 45°. For example, α1 may be a numeric value other than 160°. For example, the distance r1 may be a numeric value other than 10 m. The center of the transmission range S1 may be the center of the horizontal range of the transmission waves.

FIG. 16 illustrates a detection range S2 of the sensor 5 in the case of performing free space detection (FSD). The sensor 5 is located at the back right end of the mobile body 100. The position of the sensor 5 is not limited to the back right end of the mobile body 100, and may be any other position such as the back left end. The number of sensors 5 may be any number greater than or equal to 1. In FIG. 16, a horizontal axis passing through the sensor 5 in a direction approximately parallel to the direction of travel in the case where the mobile body 100 travels in a straight line is the Y-axis. An angle counterclockwise from the Y-axis is an angle in the outward direction. The direction approximately parallel to the direction of travel in the case where the mobile body 100 travels in a straight line may be, for example, a direction approximately parallel to a vehicle body side surface of the mobile body 100.

In the case of free space detection (FSD) in FIG. 16, the range S2 of the transmission waves of the sensor 5 may be such that the angle θ2 of axis C passing through the center of the transmission range S2 with respect to the Y-axis when the sensor 5 including the transmission antenna is seen from above in the vertical direction is 95° from the Y-axis in the outward direction. In the case of free space detection (FSD) in FIG. 16, the range S2 of the transmission waves of the sensor 5 may be such that the distance r2 from the sensor 5 is less than or equal to 15 m at the maximum. The angle range α2 of the transmission range S2 is 20°. These numeric values described with reference to FIG. 16 may be changed to other values as appropriate. For example, θ2 may be a numeric value other than 95°. For example, α2 may be a numeric value other than 20°. For example, the distance r2 may be a numeric value other than 15 m. The center of the transmission range S2 may be the center of the horizontal range of the transmission waves.

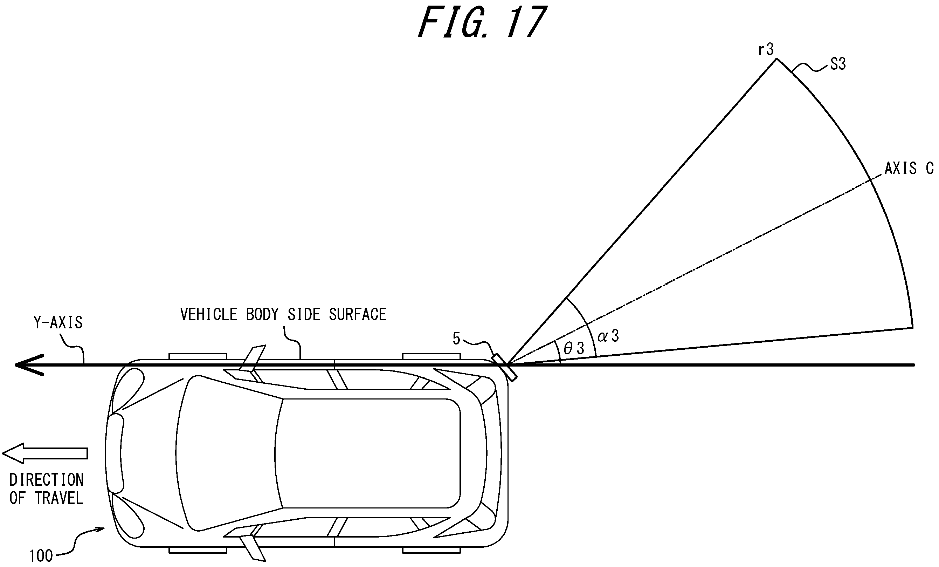

FIG. 17 illustrates a detection range S3 of the sensor 5 in the case of performing blind spot detection (BSD). The sensor 5 is located at the back right end of the mobile body 100. The position of the sensor 5 is not limited to the back right end of the mobile body 100, and may be any other position such as the back left end. The number of sensors 5 may be any number greater than or equal to 1. In FIG. 17, a horizontal axis passing through the sensor 5 in a direction approximately parallel to the direction of travel in the case where the mobile body 100 travels in a straight line is the Y-axis. An angle counterclockwise from the Y-axis is an angle in the outward direction. The direction approximately parallel to the direction of travel in the case where the mobile body 100 travels in a straight line may be, for example, a direction approximately parallel to a vehicle body side surface of the mobile body 100.

In the case of blind spot detection (BSD) in FIG. 17, the range S3 of the transmission waves of the sensor 5 may be such that the angle θ3 of axis C passing through the center of the transmission range S3 with respect to the Y-axis when the sensor 5 including the transmission antenna is seen from above in the vertical direction is 30° from the Y-axis in the outward direction. In the case of blind spot detection (BSD) in FIG. 17, the range S3 of the transmission waves of the sensor 5 may be such that the distance r3 from the sensor 5 is less than or equal to 100 m at the maximum. The angle range α3 of the transmission range S3 is 50°. These numeric values described with reference to FIG. 17 may be changed to other values as appropriate. For example, θ3 may be a numeric value other than 30°. For example, α3 may be a numeric value other than 50°. For example, the distance r3 may be a numeric value other than 100 m. The center of the transmission range S3 may be the center of the horizontal range of the transmission waves.

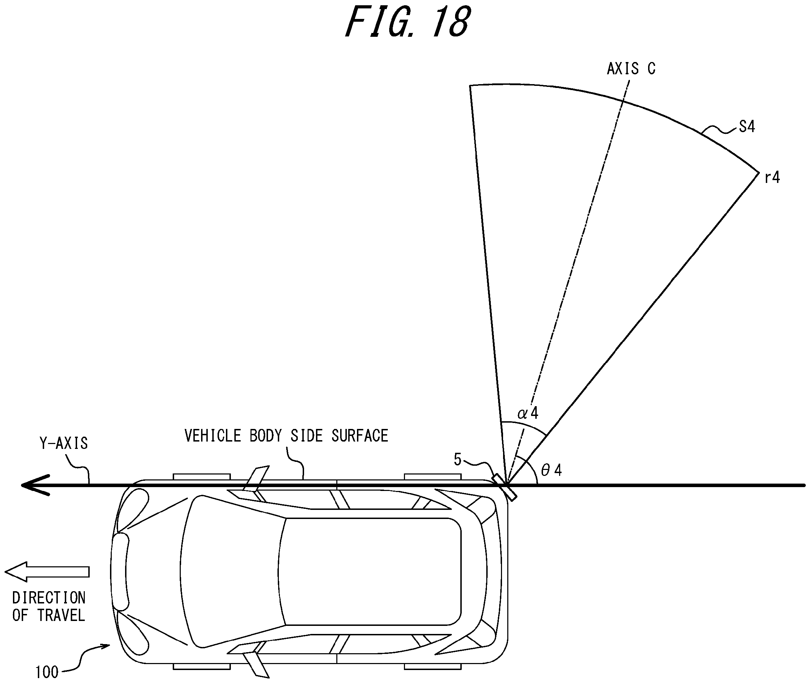

FIG. 18 illustrates a detection range S4 of the sensor 5 in the case of performing rear cross traffic alert (rear-CTA). The sensor 5 is located at the back right end of the mobile body 100. The position of the sensor 5 is not limited to the back right end of the mobile body 100, and may be any other position such as the back left end. The number of sensors 5 may be any number greater than or equal to 1. In FIG. 18, a horizontal axis passing through the sensor 5 in a direction approximately parallel to the direction of travel in the case where the mobile body 100 travels in a straight line is the Y-axis. An angle counterclockwise from the Y-axis is an angle in the outward direction. The direction approximately parallel to the direction of travel in the case where the mobile body 100 travels in a straight line may be, for example, a direction approximately parallel to a vehicle body side surface of the mobile body 100.

In the case of rear cross traffic alert (rear-CTA) in FIG. 18, the range S4 of the transmission waves of the sensor 5 may be such that the angle θ4 of axis C passing through the center of the transmission range S4 with respect to the Y-axis when the sensor 5 including the transmission antenna is seen from above in the vertical direction is 70° from the Y-axis in the outward direction. In the case of rear cross traffic alert (rear-CTA) in FIG. 18, the range S4 of the transmission waves of the sensor 5 may be such that the distance r4 from the sensor 5 is less than or equal to 100 m at the maximum. The angle range α4 of the transmission range S4 is 50°. These numeric values described with reference to FIG. 18 may be changed to other values as appropriate. For example, θ4 may be a numeric value other than 70°. For example, α4 may be a numeric value other than 50°. For example, the distance r4 may be a numeric value other than 100 m. The center of the transmission range S4 may be the center of the horizontal range of the transmission waves.

In each of the examples illustrated in FIGS. 15 to 18, the direction of travel of the mobile body 100 is leftward in the drawing, i.e. the arrow direction indicating forward from the mobile body 100. However, the direction of travel of the mobile body 100 may be other than forward from the mobile body 100. The direction of travel of the mobile body 100 may be any direction that includes not only forward from the mobile body 100 but also backward, backward right, backward left, forward right, or forward left from the mobile body 100.

In the case of parking assistance (PA) in FIG. 15, for example, the angle θ1 of axis C of the transmission range S1 from the Y-axis is 45° from the Y-axis in the outward direction, the distance r1 is less than or equal to 10 m at the maximum, and the angle range α1 is 160°. As a result of setting these numeric values, for example, in a range in which monitoring is needed when parking the mobile body in a garage or in parallel parking or when starting the mobile body from a parked state, persons, cars, and other detection targets can be detected appropriately.

In the case of free space detection (FSD) in FIG. 16, for example, the angle θ2 of axis C of the transmission range S2 from the Y-axis is 95° from the Y-axis in the outward direction, the distance r2 is less than or equal to 15 m at the maximum, and the angle range α2 is 20°. As a result of setting these numeric values, for example, a range around the mobile body 100 in which the mobile body 100 can run, a range in which the mobile body 100 can be parked, and persons, cars, and other detection targets in such ranges can be detected appropriately.

In the case of blind spot detection (BSD) in FIG. 17, for example, the angle θ3 of axis C of the transmission range S3 from the Y-axis is 30° from the Y-axis in the outward direction, the distance r3 is less than or equal to 100 m at the maximum, and the angle range α3 is 50°. As a result of setting these numeric values, for example, persons, cars, and other detection targets can be detected appropriately on the back side of the mobile body 100 that can be a blind spot of the driver of the mobile body 100.

In the case of rear cross traffic alert (rear-CTA) in FIG. 18, for example, the angle θ4 of axis C of the transmission range S4 from the Y-axis is 70° from the Y-axis in the outward direction, the distance r4 is less than or equal to 100 m at the maximum, and the angle range α4 is 50°. As a result of setting these numeric values, for example, persons, cars, and other detection targets at the back right and left can be detected appropriately when moving the mobile body 100 from a parking lot or the like.

The controller 10 in the electronic device 1 according to the present disclosure can appropriately select at least any of the ranges of detecting objects by the transmission signal and the reception signal from the foregoing ranges S1, S2, S3, and S4, for each frame, subframe, or chirp signal of the transmission waves or for any combination thereof. In this way, the controller 10 in the electronic device 1 according to the present disclosure can perform detection according to a plurality of purposes, applications, and/or functions flexibly at high speed. The controller 10 in the electronic device 1 according to the present disclosure may select, as the ranges of detecting objects by the transmission signal and the reception signal, any combination of ranges other than the foregoing ranges S1, S2, S3, and S4, for each frame, subframe, or chirp signal of the transmission waves or for any combination thereof. Thus, the electronic device 1 according to the present disclosure can achieve multiple functions by millimeter-wave radar.

The controller 10 in the electronic device 1 according to the present disclosure may appropriately select at least any of the plurality of ranges of detecting objects by the transmission signal and the reception signal from the foregoing ranges S1, S2, S3, and S4. Although the above describes the case where the Y-axis is a horizontal axis passing through the sensor 5, the Y-axis may be a horizontal axis passing through any point in the sensor 5, or a horizontal axis passing through an approximate center of the placement position of the transmission antennas of the sensor 5.

Herein, the approximate center of the placement position of the transmission antennas of the sensor 5 may be, in the case where the plurality of antennas are arranged in the horizontal direction, the center of the positions of the plurality of antennas in the horizontal direction. The approximate center of the placement position of the transmission antennas of the sensor 5 may be, in the case where the plurality of antennas are arranged in the vertical direction, the center of the positions of the plurality of antennas in the vertical direction. The approximate center of the placement position of the transmission antennas of the sensor 5 may be, in the case where the plurality of antennas are arranged in the horizontal direction and the vertical direction, the center of the positions of the plurality of antennas in the horizontal direction and the center of the positions of the plurality of antennas in the vertical direction. The approximate center of the placement position of the transmission antennas of the sensor 5 may be, in the case where the plurality of antennas are arranged in the horizontal direction and the vertical direction, the center of the positions of the plurality of antennas in the horizontal direction or the center of the positions of the plurality of antennas in the vertical direction.

In the present disclosure, the expression that the range of the transmission waves is less than or equal to the maximum distance R [m] from the sensor 5 may denote that the maximum range of an object detectable by the sensor 5 is the maximum distance R [m] from the sensor 5. The transmission waves may be transmitted farther than R [m]. R [m] may be determined selectively using the output intensity of the transmission waves, the scattering cross-section of the object, the size of the object, the material of the object, the frequency of the transmission waves, the transmission wave transmission environment such as humidity and temperature, the gain of the transmission antenna, the gain of the reception antenna, the SN ratio required of the reception signal, etc.

The controller 10 in the electronic device 1 according to each embodiment of the present disclosure may appropriately select at least any of the ranges of detecting objects by the transmission signal and the reception signal from the foregoing ranges S1, S2, S3, and S4, for each frame, subframe, or chirp signal of the transmission waves or for any combination thereof.

While some embodiments and examples of the present disclosure have been described above by way of drawings, various changes and modifications may be easily made by those of ordinary skill in the art based on the present disclosure. Such changes and modifications are therefore included in the scope of the present disclosure. For example, the functions included in the functional parts, etc. may be rearranged without logical inconsistency, and a plurality of functional parts, etc. may be combined into one functional part, etc. and a functional part, etc. may be divided into a plurality of functional parts, etc. Moreover, each of the disclosed embodiments is not limited to the strict implementation of the embodiment, and features may be combined or partially omitted as appropriate. That is, various changes and modifications may be made to the presently disclosed techniques by those of ordinary skill in the art based on the present disclosure. Such changes and modifications are therefore included in the scope of the present disclosure. For example, functional parts, means, steps, etc. in each embodiment may be added to another embodiment without logical inconsistency, or replace functional parts, means, steps, etc. in another embodiment. In each embodiment, a plurality of functional parts, means, steps, etc. may be combined into one functional part, means, step, etc., and a functional part, means, step, etc. may be divided into a plurality of each functional parts, means, steps, etc. Moreover, each of the disclosed embodiments is not limited to the strict implementation of the embodiment, and features may be combined or partially omitted as appropriate.

For example, the foregoing embodiments describe the case where the object detection ranges are dynamically switched by one sensor 5. However, in an embodiment, object detection may be performed in the determined object detection ranges by a plurality of sensors 5. Moreover, in an embodiment, beamforming may be directed to the determined object detection ranges by the plurality of sensors 5.

The foregoing embodiments are not limited to implementation as the electronic device 1. For example, the foregoing embodiments may be implemented as a control method of a device such as the electronic device 1. For example, the foregoing embodiments may be implemented as a control program of a device such as the electronic device 1.

The electronic device 1 according to the embodiment may include, for example, at least part of only one of the sensor 5 and the controller 10, as a minimum structure. The electronic device 1 according to the embodiment may include at least one of the signal generator 21, the synthesizer 22, the phase controller 23, the amplifier 24, and the transmission antenna 25 illustrated in FIG. 2 as appropriate, in addition to the controller 10. The electronic device 1 according to the embodiment may include at least one of the reception antenna 31, the LNA 32, the mixer 33, the IF unit 34, and the AD converter 35 as appropriate, instead of or together with the foregoing functional parts. Further, the electronic device 1 according to the embodiment may include the memory 40. The electronic device 1 according to the embodiment can thus have any of various structures. In the case where the electronic device 1 according to the embodiment is mounted in the mobile body 100, for example, at least one of the foregoing functional parts may be installed in an appropriate location such as the inside of the mobile body 100. In an embodiment, for example, at least one of the transmission antenna 25 and the reception antenna 31 may be installed on the outside of the mobile body 100.

The foregoing embodiments describe the case where a different type of radar function is set (assigned) in each frame or the like of the transmission waves T with reference to FIGS. 8 to 10, the presently disclosed techniques are not limited to such. For example, the controller 10 may set any of a plurality of ranges of detecting objects by the transmission signal and the reception signal, based on a frame, a portion (e.g. subframe) constituting the frame, a chirp signal, or any combination thereof.

### REFERENCE SIGNS LIST

- 1: electronic device
- 5: sensor
- 10: controller
- 11: distance FFT processor
- 12: speed FFT processor
- 13: arrival angle estimation unit
- 14: object detector
- 15: detection range determination unit
- 16: parameter setting unit
- 20: transmitter
- 21: signal generator
- 22: synthesizer
- 23: phase controller
- 24: amplifier
- 25: transmission antenna
- 30: receiver
- 31: reception antenna
- 32: LNA
- 33: mixer
- 34: IF unit
- 35: AD converter
- 40: memory
- 50: ECU
- 100: mobile body
- 200: object

## Claims

1. An electronic device comprising:
a transmission antenna configured to transmit transmission waves;
a reception antenna configured to receive reflected waves resulting from reflection of the transmission waves; and
a controller configured to: detect an object reflecting the transmission waves, based on a transmission signal transmitted as the transmission waves and a reception signal received as the reflected waves; and set a range of detection of the object, for each frame of the transmission waves.

2. The electronic device according to claim 1, wherein the controller is configured to switch the range of the detection of the object for each frame of the transmission waves, to perform transmission of the transmission signal and reception of the reception signal.

3. The electronic device according to claim 1 or 2, wherein the controller is configured to set a parameter defining the range of the detection of the object, for each frame of the transmission waves.

4. The electronic device according to any of claims 1 to 3, wherein the controller is configured to set a distance of the detection of the object, for each frame of the transmission waves.

5. The electronic device according to any of claims 1 to 4, wherein the controller is configured to set the range of the detection of the object, depending on a purpose of the detection of the object.

6. The electronic device according to any of claims 1 to 5, wherein the transmission antenna includes a plurality of transmission antennas,
the electronic device comprises a transmission controller configured to perform control so that transmission waves transmitted from the plurality of transmission antennas will form a beam in a predetermined direction, and
the transmission controller is configured to form the beam in a direction of the range of the detection of the object.

7. The electronic device according to claim 6, wherein the transmission antenna includes a plurality of transmission antennas arranged at different positions in a horizontal direction, and
the transmission controller is configured to change the direction of the beam in the horizontal direction.

8. The electronic device according to claim 6 or 7, wherein the transmission antenna includes a plurality of transmission antennas arranged at different positions in a vertical direction, and
the transmission controller is configured to change the direction of the beam in the vertical direction.

9. The electronic device according to claim 6, wherein the transmission controller is configured to form the beam to cover at least part of the range of the detection of the object.

10. The electronic device according to claim 6 or 7, wherein the transmission controller is configured to control a phase of transmission waves transmitted from at least one of the plurality of transmission antennas so that the transmission waves transmitted from the plurality of transmission antennas will be in phase with each other in a predetermined direction.

11. The electronic device according to any of claims 1 to 10, wherein the controller is configured to set the range of the detection of the object, for each portion constituting the frame of the transmission waves.

12. The electronic device according to any of claims 1 to 11, wherein the controller is configured to set the range of the detection of the object, for each of one or more chirp signals constituting the frame of the transmission waves.

13. The electronic device according to claim 1, wherein the controller is configured to set the transmission signal for each of one or more frames of the transmission waves.

14. A control method of an electronic device, comprising:
transmitting transmission waves from a transmission antenna;
receiving reflected waves resulting from reflection of the transmission waves, by a reception antenna;
detecting an object reflecting the transmission waves, based on a transmission signal transmitted as the transmission waves and a reception signal received as the reflected waves; and
setting a range of detection of the object, for each frame of the transmission waves.

15. A control program of an electronic device, causing a computer to execute:
transmitting transmission waves from a transmission antenna;
receiving reflected waves resulting from reflection of the transmission waves, by a reception antenna;
detecting an object reflecting the transmission waves, based on a transmission signal transmitted as the transmission waves and a reception signal received as the reflected waves; and
setting a range of detection of the object, for each frame of the transmission waves.

16. An electronic device comprising:
a transmission antenna configured to transmit transmission waves;
a reception antenna configured to receive reflected waves resulting from reflection of the transmission waves; and
a controller configured to: detect an object reflecting the transmission waves, based on a transmission signal transmitted as the transmission waves and a reception signal received as the reflected waves; and set a range of detection of the object, for at least any of each frame of the transmission waves, each portion constituting the frame, and each chirp signal included in the transmission waves.

17. The electronic device according to claim 16, wherein the transmission antenna is located in a mobile body, and
the range of the detection of the object is such that an axis C passing through a center of a transmission range when the transmission antenna is seen from above in a vertical direction forms an angle of 45° with respect to a Y-axis and a distance from the transmission antenna is 10 m or less, where the Y-axis is a horizontal axis passing through the transmission antenna in a direction approximately parallel to a direction of travel of the mobile body.

18. The electronic device according to claim 16, wherein the transmission antenna is located in a mobile body, and
the range of the detection of the object is such that an axis C passing through a center of a transmission range when the transmission antenna is seen from above in a vertical direction forms an angle of 95° with respect to a Y-axis and a distance from the transmission antenna is 15 m or less, where the Y-axis is a horizontal axis passing through the transmission antenna in a direction approximately parallel to a direction of travel of the mobile body in the case where the mobile body travels in a straight line.

19. The electronic device according to claim 16, wherein the transmission antenna is located in a mobile body, and
the range of the detection of the object is such that an axis C passing through a center of a transmission range when the transmission antenna is seen from above in a vertical direction forms an angle of 30° with respect to a Y-axis and a distance from the transmission antenna is 100 m or less, where the Y-axis is a horizontal axis passing through the transmission antenna in a direction approximately parallel to a direction of travel of the mobile body in the case where the mobile body travels in a straight line.

20. The electronic device according to claim 16, wherein the transmission antenna is located in a mobile body, and
the range of the detection of the object is such that an axis C passing through a center of a transmission range when the transmission antenna is seen from above in a vertical direction forms an angle of 70° with respect to a Y-axis and a distance from the transmission antenna is 100 m or less, where the Y-axis is a horizontal axis passing through the transmission antenna in a direction approximately parallel to a direction of travel of the mobile body in the case where the mobile body travels in a straight line.

21. The electronic device according to any of claims 16 to 20, wherein at least two chirp signals included in the transmission waves are different from each other in at least one of time length, maximum frequency, and frequency gradient.

22. An electronic device comprising:
a transmission antenna configured to transmit transmission waves;
a reception antenna configured to receive reflected waves resulting from reflection of the transmission waves; and
a controller configured to: detect an object reflecting the transmission waves, based on a transmission signal transmitted as the transmission waves and a reception signal received as the reflected waves; set a range of detection of the object, for each frame of the transmission waves; and include, in the frame, a signal used for calibration.

23. The electronic device according to claim 22, wherein the controller is configured to perform the calibration using the signal included in the frame.
